# EUROPEAN PATENT APPLICATION

(11) **EP 4 753 294 A1**
(43) Date of publication of application: **03.06.2026**
(21) Application number: 24855559.1
(22) Date of filing: 25.07.2024
(51) Int. Cl.: H04W 4/029, H04L 51/222

(54) **COMMUNICATION METHOD AND APPARATUS**

(30) Priority: 18.08.2023 CN 202311046096
(71) Applicant: Huawei Technologies Co., Ltd., Shenzhen, Guangdong 518129 (CN)
(72) Inventor: JIA, Jianxin, Shenzhen, Guangdong 518129 (CN); LI, Guanglei, Shenzhen, Guangdong 518129 (CN); ZHOU, Han, Shenzhen, Guangdong 518129 (CN); WU, Wenfu, Shenzhen, Guangdong 518129 (CN)
(74) Representative: Epping - Hermann - Fischer
(86) International application number: PCT/CN2024/107636
(87) International publication number: WO 2025/039833

(57) **Abstract**

A communication method and apparatus are provided, to anonymize a sensitive area and/or a sensitive target in a sensing service, so as to avoid leakage of sensitive information. The method includes: A first network element receives a first message from a second network element, where the first message is used for requesting sensing information, the first message includes a first area and/or a first target, the first area includes an area that is not allowed to be sensed, and the first target includes a target that is not allowed to be sensed; and the first network element sends a second message to an access network device, where the second message is used for requesting the access network device to perform sensing, the second message includes a second area and/or a second target, the second area is an area that is allowed to be sensed, and the second target is a target that is allowed to be sensed. According to the method, sensitive information in a sensing request can be anonymized.

## Description

### CROSS-REFERENCE TO RELATED APPLICATION

This application claims priority to Chinese Patent Application No. 202311046096.0, filed with the China National Intellectual Property Administration on August 18, 2023 and entitled "COMMUNICATION METHOD AND APPARATUS", which is incorporated herein by reference in its entirety.

### TECHNICAL FIELD

This application relates to the field of mobile communication technologies, and in particular, to a communication method and apparatus.

### BACKGROUND

With continuous development of mobile communication technologies and enhancement of air interface capabilities, mobile networks have made a qualitative leap from merely providing a simple voice service, short message service, and data service to achieving the internet of everything. In addition, continuous innovation of information technologies brings new requirements and services such as artificial intelligence, immersive experience, and a digital twin, and poses higher information exchange requirements on communication networks. In addition to improvement of conventional communication capabilities, capabilities such as computing, sensing, artificial intelligence, and security are also provided. The sensing capability is to become an important capability and feature of a future mobile communication network.

To support the sensing capability, the 3rd generation partnership project (3rd generation partnership project, 3GPP) describes use cases and potential requirements of sensing services, including, for example, automated/assisted driving, unmanned aerial vehicles, map reconstruction, smart cities, smart homes, factories, healthcare, and maritime sectors. However, in a sensing process, how to avoid sensing a sensitive area or a sensitive target that is not allowed to be sensed to implement anonymization of sensing information still needs to be further studied.

### SUMMARY

This application provides a communication method and apparatus, to avoid sensing a sensitive area and/or a sensitive target in a sensing service, so as to implement anonymization of sensing information.

According to a first aspect, a communication method is provided. The method may be implemented by a first network element, and the first network element may also be referred to as a first communication apparatus. The first network element may be an SF or a component of the SF, for example, an SF-C or an SF-U. The component in this application may include, for example, at least one of a chip, a chip system, a processor, a transceiver, a processing unit, or a transceiver unit. An example in which an execution entity is the first network element is used. The method may be implemented by using the following steps: The first network element receives a first message from a second network element, where the first message is used for requesting or subscribing to sensing (sensing) information or sensing service information, the first message includes a first area and/or a first target, the first area includes an area that is not allowed to be sensed, and the first target includes a target that is not allowed to be sensed; and the first network element sends a second message to an access network device, where the second message is used for requesting the access network device to perform sensing, the second message includes a second area and/or a second target, the second area is an area that is allowed to be sensed, and the second target is a target that is allowed to be sensed.

According to the method shown in the first aspect, a sensitive area and/or a sensitive target in the first message may be filtered, to avoid providing sensing information of the sensitive area and/or the sensitive target for an initiator of a sensing service based on a sensing request, so as to implement anonymization of the sensing information in the sensing request, thereby avoiding leakage of the sensitive information.

In this application, "allowed" may mean "authorized", "authenticated (authentication)", or that "authentication succeeds"; and "not allowed" may mean "unauthorized", "unauthenticated", or that "authentication fails".

In this application, the area that is not allowed to be sensed may also be referred to as a forbidden area (forbidden area), a not allowed area (not allowed area), a sensitive area (sensitive area), a restricted area (restricted area), or a privacy area (privacy area); and the target that is not allowed to be sensed may also be referred to as a forbidden target (forbidden target), a not allowed target (not allowed target), a sensitive target (sensitive target), a restricted target, or a privacy target.

In this application, a function of the first message may also be described as follows: The first message is used for carrying a parameter of a sensing service, used for carrying a sensing requirement of a sensing initiator, used for requesting a sensing result, used for requesting sensing information, used for requesting a sensing session, used for requesting a sensing business, used for requesting a sensing service, or the like. The first message may include a sensing service request message, a sensing session request message, a sensing service subscription message, a sensing session subscription message, a sensing information subscription message, a sensing subscription message, a subscription message, a request message, a sensing information requirement, or the like.

A function of the second message may be also described as follows: The second message is used for requesting the access network device to perform sensing, used for triggering sensing of the access network device, used for triggering the access network device to perform sensing, used for the access network device to perform sensing, used for sending the sensing service/a sensing session parameter to the access network device, used for requesting the access network device to perform configuration, used for requesting the access network device to create a sensing context, used for requesting the access network device to set up a sensing resource (sensing resource), used for requesting the access network device to assign the sensing resource (assign resource for sensing service/session), or used for requesting the access network device to set up (setup) the sensing session/sensing service.

In this application, the area may include area information or location information, for example, include a geographic area (geographic area) and/or a reference area. The geographic area may include longitude and latitude information, coordinate information, range information, or the like of an area. The reference area may be 3GPP area information, for example, information such as a cell identifier, a transmission reception point (transmission reception point, TRP) identifier, a center unit or central unit (central unit, CU) identifier, a distributed unit (distributed unit, DU) identifier, a remote radio unit (remote radio unit, RRU) identifier, an active antenna unit (active antenna unit, AAU) identifier, an access network device identifier, or a tracking area identifier (tracking area ID, TAI).

In addition, that the second area is the area that is allowed to be sensed may be understood as that the second area does not include an area that is not allowed to be sensed. That the second target is the target that is allowed to be sensed may be understood as that the second target does not include a target that is not allowed to be sensed.

In this application, the target may include information about the target, for example, a target type, a target object (target object), a target identifier, trajectory information of the target, location information of the target, imaging information of the target, identification information of the target, appearance information of the target, a contour of the target, a gait of the target, or other information. The target type may indicate that a detected target type is a person, a vehicle, an unmanned aerial vehicle, a fruit, or the like. The target object, for example, a specific detected object, may be, for example, a person or a vehicle. The target identifier is, for example, a terminal identifier such as a subscription permanent identifier (subscription permanent identifier, SUPI) or an international mobile subscriber identity (international mobile subscriber identity, IMSI), or may be a temporary identifier allocated by a core network to the target.

In this application, the area may be replaced with information about the area and area information, and the target may be replaced with information about the target and target information. The area information may include location information of the area.

In this application, the second network element may be different from the first network element.

In a possible implementation, the first network element may send a third message when the first area does not include an area that is allowed to be sensed; and/or the first network element may send a third message when the first target does not include a target that is allowed to be sensed. The third message indicates rejection of sensing.

Optionally, "when the first area does not include an area that is allowed to be sensed" may be replaced with "if the first area does not include an area that is allowed to be sensed", and "when the first target does not include a target that is allowed to be sensed" may be replaced with "if the first target does not include a target that is allowed to be sensed".

In other words, if an area and/or a target requested to be sensed by the initiator of the sensing service are/is all sensitive information, the first network element may reject the sensing request of the initiator.

In this application, the third message may indicate rejection of sensing, or the third message may carry information, a field, an information element, an indication, or a notification indicating rejection of sensing. For example, the third message may carry a cause (cause) field to indicate rejection and/or a cause for rejection. It may also be understood that, the third message or information, a field, or an information element in the third message indicates a failure or an abnormity, for example, indicates that the sensing request, the sensing service, or the sensing session fails or is abnormal.

In a possible implementation, the first network element may determine, generate, produce, or obtain the second area based on the area that is not allowed to be sensed and the first area; and/or the first network element determines, generates, produces, or obtains the second target based on the target that is not allowed to be sensed and the first target.

According to this implementation, the first network element may determine the second area and/or the second target based on the first area and/or the first target. For example, in this case, the first network element may store the area that is not allowed to be sensed and/or the target that is not allowed to be sensed.

In this application, "determine" may be replaced with terms such as "generate", "produce", "obtain", or "acquire".

It may be understood that, if areas requested, by the initiator of the sensing service, to be sensed are all sensitive areas, it is not excluded that the first network element may determine, based on an area that is requested to be sensed, an area that is allowed to be sensed other than the area as the second area, for example, the first network element determines, based on the first area, a nearby area that is allowed to be sensed as the second area, to improve sensing efficiency; and/or if targets requested, by the initiator of the sensing service, to be sensed are all sensitive targets, it is not excluded that the first network element may determine, based on a target that is requested to be sensed, a target that is allowed to be sensed other than the target as the second target, for example, the first network element determines, based on the first target, a target with a similar type that is allowed to be sensed as the second target, to improve sensing efficiency.

In a possible implementation, the first network element may further receive the area that is not allowed to be sensed and/or the target that is not allowed to be sensed. The first network element may further locally obtain the area that is not allowed to be sensed and/or the target that is not allowed to be sensed.

In a possible implementation, the first network element may further determine, based on the area that is not allowed to be sensed and information about the first area, that the first area includes the area that is not allowed to be sensed.

In a possible implementation, the first network element may further send the first area and/or the first target to a third network element, and receive the second area and/or the second target from the third network element. Therefore, the third network element may determine the second area and/or the second target based on the first area and/or the first target. For example, in this case, the third network element may store the area that is not allowed to be sensed and/or the target that is not allowed to be sensed, in other words, the first network element may not store the area that is not allowed to be sensed and/or the target that is not allowed to be sensed.

It may be understood that, if areas requested, by the initiator of the sensing service, to be sensed are all sensitive areas, it is not excluded that the third network element may determine, based on an area that is requested to be sensed, an area that is allowed to sensed other than the area as the second area, for example, the third network element determines, based on the first area, a nearby area that is allowed to sense as the second area, to improve sensing efficiency; and/or if targets requested, by the initiator of the sensing service, to be sensed are all sensitive targets, it is not excluded that the third network element may determine, based on a target that is requested to be sensed, a target that is allowed to be sensed other than the target as the second target, for example, the third network element determines, based on the first target, a target with a similar type that is allowed to be sensed as the second target, to improve sensing efficiency.

In a possible implementation, the first area includes geographic area information of the first area. In other words, a NEF may ignore/not converting/convert the geographic area information carried in the sensing request of the initiator of the sensing service into reference area information. Because there may be a difference between the geographic area information and the reference area information, conversion may cause inconsistency between a sensing area and a required area. Therefore, skipping area information conversion can improve sensing accuracy, to avoid sensing an area that does not need to be sensed for the initiator.

According to a second aspect, a communication method is provided. The method may be implemented by a third network element or a component in the third network element. The third network element may also be referred to as a third communication apparatus. For example, the third network element may be a UDM, an NRF, a UDSF, or another core network element, or may be a sensitive target management/storage network element, a sensitive area management/storage network element, or a sensitive area and sensitive target management/storage network element, or may be an SF-C in a scenario in which an SF uses a C-U separation architecture. An example in which an execution entity is the third network element. The method may be implemented by using the following steps: The third network element receives a first area and/or a first target from a first network element, where the first area includes an area that is not allowed to be sensed, and the first target includes a target that is not allowed to be sensed; and the third network element sends a second area and/or a second target, where the second area is an area that is allowed to be sensed, and the second target is a target that is allowed to be sensed.

In a possible implementation, the third network element determines the second area based on the area that is not allowed to be sensed and the first area; and/or the third network element determines the second target based on the target that is not allowed to be sensed and the first target.

In a possible implementation, the third network element may be further configured to perform one or more of the following: receiving the area that is not allowed to be sensed; obtaining locally the area that is not allowed to be sensed; receiving the target that is not allowed to be sensed; and obtaining locally the target that is not allowed to be sensed.

In a possible implementation, the first area includes geographic area information of the first area. For example, the area that is not allowed to be sensed includes geographic area information that is not allowed to be sensed, and the first area includes the geographic area information of the first area. The third network element determines, based on the area that is not allowed to be sensed and the geographic area information of the first area, that the first area includes the area that is not allowed to be sensed.

In a possible implementation, the third network element may send the second area and/or the second target to the first network element. In this case, the third network element may be a UDM, an NRF, a UDSF, or another core network element, or may be a sensitive target management network element, a sensitive area management network element, or a sensitive area and sensitive target management network element. Correspondingly, the first network element may be an SF, an SF-C, or an SF-U.

In a possible implementation, the third network element is an SF-C, and the first network element may be an SF-U. In this case, the first network element or the third network element may send the second area and/or the second target to a second network element, for example, send a sensing result, where the sensing result includes sensing results and/or a sensing result corresponding to the second area and/or the second target. The second network element may be a requester of a sensing service; or the second network element may be a NEF, an AF, or another core network element, and is configured to forward the sensing request.

According to a third aspect, a communication method is provided. The method may be implemented by a first network element, and the first network element may also be referred to as a first communication apparatus. The first network element may be an SF or a component of the SF, for example, an SF-C or an SF-U. An example in which an execution entity is a first network element is used. The method may be implemented by using the following steps: The first network element receives a fourth message from an access network device, where the fourth message includes sensing data; and the first network element sends a fifth message to a second network element, where the fifth message includes a fourth area and/or a fourth target, the fourth area and/or the fourth target are/is determined based on the sensing data, the fourth area is an area that is allowed to be sensed, and the fourth target is a target that is allowed to be sensed.

According to the third aspect, the first network element may receive the sensing data from the access network device, and when sensing information obtained based on the sensing data may include an area that is not allowed to be sensed and/or sensing data corresponding to a target, the first network element may send, to the second network element, a sensing result that includes only the area that is allowed to be sensed and/or the target, to avoid leakage of sensitive information in a sensing service.

In this application, the sensing data may be sensing measurement data or point cloud data obtained by a terminal device and/or the access network device through sensing. The sensing data may include at least one type of the following information: speed, range, angle, coordinates, time, energy, and the like. The coordinates in this application may include longitude and latitude and/or geographical coordinates. The time in this application may include a timestamp of each sampling point/point/measurement point. The energy in this application may include echo energy included in each sampling point.

In this application, a process of determining an area and/or a target based on the sensing data may include: processing the sensing data, for example, performing operations such as clustering and tracking filtering, to obtain a sensing result. The sensing result is described above. For example, the sensing result may include information about the target. For example, the information about the target includes a location, a trajectory, a contour, an identification result, a gait, imaging, and other information of the target. The fourth area and/or the fourth target may be included in the sensing information obtained based on the sensing data.

In a possible implementation, the first network element may further determine a third area and/or a third target based on the sensing data, where the third area includes an area that is not allowed to be sensed, and the third target includes a target that is not allowed to be sensed. The fourth area is determined based on the third area, and the fourth target is determined/generated/produced/obtained based on the third target. Optionally, the third area includes the fourth area, and the third target includes the fourth target.

In a possible implementation, the first network element may be an access network device, and the second network element may be a sensing function network element SF, a third party, an application function AF, a sensing application, a third party for sensing, a network capability exposure functional entity (network exposure function, NEF), or the like. If an AS serves as a service initiator, the second network element may be an AF or a NEF, and in this case, the second network element may receive a sensing request from the AS. If the terminal device serves as a service initiator, the second network element may be an AF or a NEF, and in this case, the service initiator may be deployed in a terminal, for example, application software in the terminal.

In addition, that "the fourth area is determined based on the third area" may be understood as deleting the area that is not allowed to be sensed and that is included in the third area or blurring the area that is not allowed to be sensed and that is included in the third area; and that "the fourth target is determined based on the third target" may be understood as deleting the target that is not allowed to be sensed and that is included in the third target or blurring the target that is not allowed to be sensed and that is included in the third area.

In this application, "deleting" may be replaced with terms such as "fuzzification", "filtering", and "encryption".

In a possible implementation, the first network element may determine the fourth area based on the area that is not allowed to be sensed and the third area; and/or the first network element may determine the fourth target based on the target that is not allowed to be sensed and the third target.

In a possible implementation, the first network element may perform one or more of the following: receiving the area that is not allowed to be sensed; obtaining locally the area that is not allowed to be sensed; receiving the target that is not allowed to be sensed; and obtaining locally the target that is not allowed to be sensed.

In a possible implementation, the first network element may further send the third area and/or the third target to a third network element, and receive the fourth area and/or the fourth target from the third network element. In this implementation, the third network element may determine the fourth area and/or the fourth target with reference to the method or the implementations shown in the second aspect.

According to a fourth aspect, a communication apparatus is provided. The apparatus may implement the method according to any one of the first aspect to the third aspect and the possible implementations of the first aspect to the third aspect. The apparatus has a function of the foregoing first network element or the foregoing third network element. The apparatus is, for example, the first network element or a functional module in the first network element, or the third network element or a functional module in the third network element.

In an optional implementation, the apparatus may include modules that one-to-one correspond with the methods/operations/steps/actions described in any one of the first aspect to the third aspect and the possible implementations of the first aspect to the third aspect. The module may be a hardware circuit or software, or may be implemented by a hardware circuit in combination with software. In an optional implementation, the apparatus includes a processing unit (sometimes also referred to as a processing module) and a communication unit (sometimes also referred to as a transceiver module, a communication module, or the like). The transceiver unit can implement a sending function and a receiving function. When the transceiver unit implements the sending function, the transceiver unit may be referred to as a sending unit (sometimes also referred to as a sending module). When the transceiver unit implements the receiving function, the transceiver unit may be referred to as a receiving unit (sometimes also referred to as a receiving module). The sending unit and the receiving unit may be a same functional module, the functional module is referred to as a transceiver unit, and the functional module can implement the sending function and the receiving function. Alternatively, the sending unit and the receiving unit may be different functional modules, and the transceiver unit is a collective term for these functional modules.

For example, when the apparatus is configured to perform the method described in any one of the first aspect to the third aspect and the possible implementations of the first aspect to the third aspect, the apparatus may include a communication unit and a processing unit.

According to a fifth aspect, an embodiment of this application further provides a communication apparatus, including a processor, configured to execute a computer program (or computer-executable instructions) stored in a memory. When the computer program (or the computer-executable instructions) is executed, the apparatus is enabled to perform the method according to any one of the first aspect to the third aspect and the possible implementations of the first aspect to the third aspect.

In a possible implementation, the processor and the memory are integrated together.

In another possible implementation, the memory is located outside the communication apparatus.

The communication apparatus further includes a communication interface. The communication interface is for communication between the communication apparatus and another device, for example, for data and/or signal sending or receiving. For example, the communication interface may be a transceiver, a circuit, a bus, a module, or a communication interface of another type.

According to a sixth aspect, a computer-readable storage medium is provided. The computer-readable storage medium is configured to store a computer program or instructions. When the computer program or the instructions are run, the method according to any one of the first aspect to the third aspect and the possible implementations of the first aspect to the third aspect is implemented.

According to a seventh aspect, a computer program product including instructions is provided. When the computer program product runs on a computer, the method according to any one of the first aspect to the third aspect and the possible implementations of the first aspect to the third aspect is implemented.

According to an eighth aspect, an embodiment of this application further provides a communication apparatus, configured to perform the method according to any one of the first aspect to the third aspect and the possible implementations of the first aspect to the third aspect.

According to a ninth aspect, a chip system is provided. The chip system includes a logic circuit (which may alternatively be understood as that the chip system includes a processor, and the processor may include a logic circuit, and the like), and may further include an input/output interface. The input/output interface may be configured to input a message, or may be configured to output a message. The input/output interface may be a same interface, that is, the same interface can implement both a sending function and a receiving function. Alternatively, the input/output interface includes an input interface and an output interface. The input interface is configured to implement a receiving function, that is, configured to receive a message. The output interface is configured to implement a sending function, that is, configured to send a message. The logic circuit may be configured to perform an operation other than the sending function and the receiving function in the method according to any one of the first aspect to the third aspect and the possible implementations of the first aspect to the third aspect. The logic circuit may be further configured to transmit a message to the input/output interface, or receive, from the input/output interface, a message from another communication apparatus. The chip system may be configured to implement the method according to any one of the first aspect to the third aspect and the possible implementations of the first aspect to the third aspect. The chip system may include a chip, or may include a chip and another discrete component.

Optionally, the chip system may further include a memory, and the memory may be configured to store instructions. The logic circuit may invoke the instructions stored in the memory to implement a corresponding function.

According to a tenth aspect, a communication system is provided. The communication system may include a first network element and a third network element. The first network element may be configured to perform the first aspect or the third aspect and any possible implementations of the first aspect or the third aspect. The third network element may be configured to perform the second aspect and any possible implementations of the second aspect.

For technical effects brought by the second aspect to the tenth aspect, refer to the descriptions of the first aspect. Details are not described herein again.

### BRIEF DESCRIPTION OF DRAWINGS

FIG. 1 is a diagram of an architecture of a wireless communication system according to an embodiment of this application;
FIG. 2 is a diagram of an architecture of another wireless communication system according to an embodiment of this application;
FIG. 3 is a schematic flowchart of a communication method according to an embodiment of this application;
FIG. 4 is a diagram of a comparison between a geographic area and a 3GPP area according to an embodiment of this application;
FIG. 5 is a schematic flowchart of another communication method according to an embodiment of this application;
FIG. 6 is a schematic flowchart of another communication method according to an embodiment of this application;
FIG. 7 is a schematic flowchart of another communication method according to an embodiment of this application;
FIG. 8 is a schematic flowchart of another communication method according to an embodiment of this application;
FIG. 9 is a schematic flowchart of another communication method according to an embodiment of this application;
FIG. 10 is a schematic flowchart of another communication method according to an embodiment of this application;
FIG. 11 is a schematic flowchart of another communication method according to an embodiment of this application;
FIG. 12 is a schematic flowchart of another communication method according to an embodiment of this application;
FIG. 13 is a schematic flowchart of another communication method according to an embodiment of this application;
FIG. 14 is a diagram of a structure of a communication apparatus according to an embodiment of this application;
FIG. 15 is a diagram of a structure of another communication apparatus according to an embodiment of this application; and
FIG. 16 is a diagram of a structure of another communication apparatus according to an embodiment of this application.

### DESCRIPTION OF EMBODIMENTS

Technical solutions provided in embodiments of this application may be applied to various communication systems. For example, the technical solutions may be applied to an LTE system or a 5G system, and may also be applied to another future-oriented new system. This is not specifically limited in embodiments of this application. In addition, the terms "system" and "network" may be interchangeable with each other. The following merely uses an architecture of a 5G communication system as an example for description.

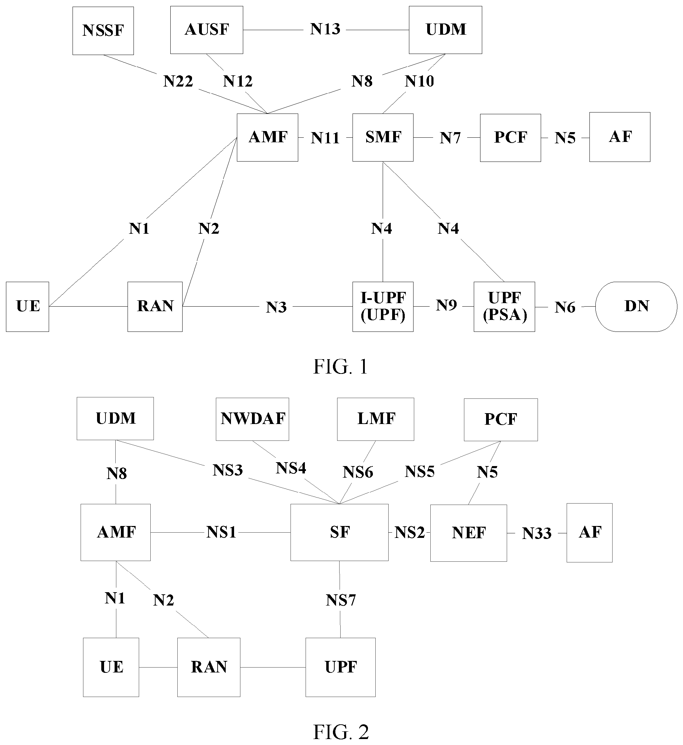

FIG. 1 shows a 5G communication system formulated in a 3rd generation partnership project (3rd generation partnership project, 3GPP) standard. The communication system includes a terminal device (for example, user equipment (user equipment, UE)), an access network (access network, AN) (for example, a radio access network (radio access network, RAN)), a core network (core network, CN), and Logically, for a data network (data network, DN), network elements of the core network may be classified into two parts: a user plane and a control plane. The control plane is responsible for mobile network management, and the user plane is responsible for service data transmission.

The terminal device is an entrance for interaction between a mobile user and a network, and can provide a basic computing capability and a storage capability, display a service window to the user, and receive a user operation input. A next generation terminal device (NextGen UE) may set up a signal connection and a data connection to the RAN by using a new radio technology, to transmit a control signal and service data to the mobile network. The terminal device may include various handheld devices, vehicle-mounted devices, wearable devices, or computing devices that have a wireless communication function, other processing devices connected to a wireless modem, and various forms of terminals, such as a mobile station (mobile station, MS), a terminal (terminal), and a soft terminal, for example, a water meter, an electricity meter, and a sensor.

The RAN is deployed near the terminal device, provides a network access function for an authorized user in a specific area, and can determine transmission tunnels of different quality based on a user level, a service requirement, and the like to transmit user data. The RAN can manage resources of the RAN, properly use the resources, provide an access service for the terminal device as required, and is responsible for forwarding the control signal and the user data between the terminal device and the core network.

The core network is responsible for maintaining subscription data of the mobile network, managing a network element of the mobile network, and providing functions such as session management, mobility management, policy management, and security authentication for the terminal device. The core network provides network access authentication for the terminal device when the terminal device is attached; allocates a network resource to the terminal device when the terminal device has a service request; updates a network resource for the terminal device when the terminal device moves; provides a fast recovery mechanism for the terminal device when the terminal device is idle; releases a network resource for the terminal device when the terminal device is detached; and provides a data routing function for the terminal device when the terminal device has service data, for example, forwards uplink data to the data network, or receives downlink data of the terminal device from the data network and forwards the downlink data to the RAN, so that the RAN sends the downlink data to the terminal device.

The data network (data network, DN) is a data network that provides a service for a user. Generally, a client is located in the terminal device, and a server is located in the data network. The data network may be a private network, for example, a local area network, or may be an external network that is not managed or controlled by an operator, for example, the internet (internet), or may be a dedicated network jointly deployed by operators, for example, a network that provides an IP multimedia core network subsystem (IP multimedia core network subsystem, IMS) service.

A core network user plane includes a user plane function (user plane function, UPF). A core network control plane includes an access and mobility management function (access and mobility management function, AMF), a session management function (session management function, SMF), a network exposure function (network exposure function, NEF), a network function repository function (NF repository function, NRF), unified data management (unified data management, UDM), a policy control function (policy control function, PCF), an application function (application function, AF), an authentication server function (authentication server function, AUSF), a network slice selection function (network slice selection function, NSSF), a location management function (location management function, LMF), an authentication and authorization function for network slice selection (network slice-specific authentication and authorization function, NSSAAF).

The core network control plane uses a service-oriented architecture. Control plane network elements interact with each other in a service invoking manner to replace a point-to-point communication manner in a conventional architecture. In the service-oriented architecture, the control plane network element exposes a service to another control plane network element, so that the another control plane network element invokes the service. In point-to-point communication, a communication interface between control plane network elements stores a set of specific messages, and the messages can be used only by control plane network elements at two ends of the interface during communication.

The following describes functions of functional entities in the core network.
1. A session management network element is mainly configured for session management, terminal device IP address allocation and management, selection and management of user equipment plane function, policy control, a charging function interface, downlink data notification, and the like. In 5G communication, the session management network element may be an SMF network element. In future communication such as 6G communication, the session management function network element may still be the SMF network element or have another name. This is not limited in this application. Nsmf is a service-oriented interface provided by the SMF. The SMF may communicate with another network function through Nsmf.
2. An access management network element is mainly configured for mobility management, access management, and the like. For example, the access management network element may be a mobility management entity (mobility management entity, MME) function in a 4G communication network or an AMF network element in a 5G network. In future communication such as 6G communication, the access management network element may still be the AMF network element or have another name. This is not limited in this application. Namf is a service-oriented interface provided by the AMF. The AMF may communicate with another network function through Namf.
3. A network exposure network element is configured for secure provision of a service, a capability, and the like from a 3GPP network function to the outside. In 5G communication, the network exposure network element may be a NEF network element. In future communication such as 6G communication, the network exposure function network element may still be the NEF network element or have another name. This is not limited in this application. Nnef is a service-oriented interface provided by the NEF. The NEF may communicate with another network function through Nnef.
4. A network repository network element is configured to: provide service registration, discovery, and authorization, and maintain available network function (network function, NF) instance information, to implement on-demand configuration of a network function and a service and interconnection between NFs. In 5G communication, the network repository network element may be an NRF network element. In future communication such as 6G communication, the network repository function network element may still be the NRF network element or have another name. This is not limited in this application. Nnrf is a service-oriented interface provided by the NRF. The NRF may communicate with another network function through Nnrf.
5. A policy control network element is configured to: guide a unified policy framework for network behavior, and provide policy rule information and the like for a control plane function network element (for example, the AMF or the SMF). In 5G communication, the policy control network element may be a PCF network element. In future communication such as 6G communication, the policy control network element may still be the PCF network element or have another name. This is not limited in this application. Npcf is a service-oriented interface provided by the PCF. The PCF may communicate with another network function through Npcf.
6. A data management network element is configured for user identifier processing, subscription, authentication access, registration, mobility management, or the like. In 5G communication, the data management network element may be a UDM network element. In future communication such as 6G communication, the data management network element may still be the UDM network element or have another name. This is not limited in this application. Nudm is a service-oriented interface provided by the UDM. The UDM may communicate with another network function through Nudm.
7. An application network element is configured for application influence on data routing, accessing a network exposure function, interacting with a policy framework to perform policy control, or the like. In 5G communication, the application network element may be an AF network element. In future communication such as 6G communication, the application network element may still be the AF network element or have another name. This is not limited in this application. Naf is a service-oriented interface provided by the AF. The AF may communicate with another network function through Naf.
8. A user plane network element is configured for packet routing and forwarding, quality of service (quality of service, QoS) handling for user plane data, or the like. In 5G communication, the user plane network element may be a user plane function (user plane function, UPF) network element. In future communication such as 6G communication, the user plane network element may still be the UPF network element or have another name. This is not limited in this application.
9. An authentication service network element is mainly configured for user authentication or the like. In 5G communication, the authentication service network element may be an AUSF network element. In future communication such as 6G communication, the authentication service network element may still be the AUSF network element or have another name. This is not limited in this application. Nausf is a service-based interface provided by the AUSF. The AUSF may communicate with another network function through Nausf.
10. A network slice selection function network element is configured for selecting a network slice for the terminal device. In 5G communication, the network slice selection function network element may be an NSSF network element. In future communication such as 6G communication, the network slice selection function network element may still be the NSSF network element or have another name. This is not limited in this application.

It may be understood that the core network may further include another network element. This is not limited in this application.

It should be noted that names of the network elements and the interfaces between the network elements in FIG. 1 are merely examples. In specific implementation, names of the network elements and the interfaces between the network elements may be others. This is not specifically limited in embodiments of this application.

A person skilled in the art may learn from FIG. 1 that the terminal device may access a 5G system through an access network device, for example, a RAN, the terminal device may communicate with the AMF network element through a next generation (next generation, NG) 1 network interface (N1 for short), the access network device communicates with the AMF network element through an N2 interface (N2 for short), the access network device communicates with the UPF network element through an N3 interface (N3 for short), the AMF network element communicates with the SMF network element through an N11 interface (N11 for short), the AMF network element communicates with the UDM network element through an N8 interface (N8 for short), the AMF network element communicates with the AUSF network element through an N12 interface (N12 for short), the AMF network element communicates with the PCF network element through an N15 interface (N15 for short), the SMF network element communicates with the PCF network element through an N7 interface (N7 for short), the SMF network element communicates with the UPF network element through an N4 interface (N4 for short), the NEF network element communicates with the SMF network element through an N29 interface (N29 for short), and the UPF network element accesses the data network (data network, DN) through an N6 interface (N6 for short).

It should be noted that names of the network elements and the interfaces between the network elements in FIG. 1 are merely examples. In specific implementation, names of the network elements and the interfaces between the network elements may be others. This is not specifically limited in embodiments of this application.

In some deployments, the access network device may include a central unit (central unit, CU) and a distributed unit (distributed unit, DU), or include a remote radio unit (remote radio unit, RRU) and an active antenna unit (active antenna unit, AAU). The access network device may further include a radio unit (radio unit, RU). The CU implements some functions of the access network device, and the DU implements some functions of the access network device. For example, the CU implements functions of a radio resource control (radio resource control, RRC) layer and a packet data convergence protocol (packet data convergence protocol, PDCP) layer, and the DU implements functions of a radio link control (radio link control, RLC) layer, a media access control (media access control, MAC) layer, and a physical (physical, PHY) layer. Information at the RRC layer finally becomes information at the PHY layer, or is converted from the information at the PHY layer. Therefore, in the architecture, higher layer signaling such as RRC layer signaling or PHCP layer signaling may also be considered as being sent by the DU or sent by the DU and the RU. It may be understood that a network device may be a CU node, a DU node, or a device including a CU node and a DU node. In addition, the CU may be classified as a network device in an access network RAN, or the CU may be classified as a network device in a core network CN. This is not limited herein.

The access network device may further include an active antenna unit (active antenna unit, AAU) and/or a baseband unit (baseband unit, BBU). The BBU is mainly responsible for baseband signal processing. The AAU implements some physical layer processing functions, radio frequency processing, and a function related to an active antenna. Information at the RRC layer finally becomes information at the PHY layer, or is converted from information at the PHY layer. Therefore, in the architecture, higher layer signaling such as RRC layer signaling may also be considered as being sent by the DU or sent by the DU and the AAU. It may be understood that the access network device may be a device including one or more of a CU node, a DU node, or an AAU node.

In addition, as shown in FIG. 2, a core network element may further include a sensing function (sensing function, SF) network element, which is referred to as an SF for short. The SF may perform radio sensing by using the access network device and/or the terminal device. The SF may be co-deployed with another network element, or a function of the SF may be specifically implemented by another network element, or the SF may be separately disposed. This is not limited in embodiments of this application. The SF may also be referred to as a sensing control (sensing control function, SCF) network element or another possible name. Optionally, the SF may alternatively be deployed in a non-core network. This is not limited in embodiments of this application.

Sensing control signaling between the SF and the access network device and/or the terminal device is transferred via the AMF. Sensing measurement data obtained by the access network device/terminal device may be transmitted to the SF through a control plane or a user plane. The user plane may be forwarded via the UPF or directly transmitted to the SF. In addition, the terminal device needs to be supported in performing sensing and the access network device needs to be supported in performing sensing charging in a sensing scenario.

Optionally, as shown in FIG. 2, interfaces are set between the SF and core network elements such as an AMF, a NEF, a UDM, an NWDAF, a PCF, an LMF, and a UPF for interaction. A specific definition is as follows:
NS1: An NS1 interface is added between the SF and the AMF. The interface may be for transferring sensing control signaling. In a scenario in which sensing measurement data is transmitted on the control plane, the interface may also be for transferring the sensing measurement data.
NS2: An NS2 interface is added between the SF and the NEF. The interface may be for transferring signaling messages exchanged between the SF and the AF on a service side via the NEF and for exposing sensing information to the AF.
NS3: An NS3 interface is added between the SF and the UDM. Through the interface, authentication or authorization may be implemented, and terminal device sensing subscription information, service AMF information, or other information is obtained.
NS4: An NS4 interface is added between the SF and the NWDAF. Through the interface, the SF may work with the NWDAF to complete artificial intelligence (artificial intelligence, AI) processing related to a sensing service.
NS5: An NS5 interface is added between the SF and the PCF. Through the interface, the SF may transfer sensing requirements of the sensing service, QoS requirements, sensing information, or other messages or signaling to the PCF, and the PCF determines and generates policy and charging control (policy and charging control, PCC) policies related to the sensing service.
NS6: An NS6 interface is added between the SF and the LMF. Through the interface, the SF may obtain location-related information, for example, a sensing area, RAN information of a sensed target, or location information of a sensed terminal device.
NS7: An NS7 interface is added between the SF and a user plane function. Sensing measurement data may be directly transmitted by the access network device to the SF by using the user plane function, or may be indirectly forwarded to the SF via the UPF. If the sensing measurement data is forwarded by the UPF in a scenario in which the access network device performs sensing, the UPF needs to be reconstructed to support data transmission at a granularity of the access network device.

In addition to the foregoing newly added interfaces, an existing communication interfaces (such as N1, N2, N5, N8, and N33) may also support to transfer information related to the sensing service, such as authentication information, a sensing service type, a sensing service quality requirement, sensing measurement data, and sensing information.

In addition, the SF may be co-deployed with the LMF. An interface needs to be added between the LMF and a GMLC to transfer the information related to the sensing service, and an interface related to the LMF and the GMLC (for example, an NL1 interface between the AMF and the LMF, or an NL2 interface between the AMF and the GMLC) is added.

The SF may obtain a sensing requirement from an initiator (or a demander or a requester) of the sensing service. The initiator of the sensing service may be an AF network element, an external application server (application server, AS), or a terminal device. After obtaining the sensing requirement, the SF may control an execution object of the sensing service to detect and/or collect sensing data. The execution object of the sensing service may include one or more access network devices and/or one or more terminal devices. The sensing requirement of the AF or the AS may be sent to the SF via the NEF.

An example in which the execution object is an access network device is used. The access network device may perform a sensing operation to obtain the sensing data. For example, the sensing operation may include sending a sensing signal and receiving an echo signal. The sensing signal is a signal used for sensing (or detecting) a sensed target (or referred to as a target object). The sensing signal is also referred to as a detecting signal, a linear frequency modulation signal, a radar signal, a radar sensing signal, a radar detecting signal, an environment sensing signal, an electromagnetic wave, a radio electromagnetic wave, an optical frequency division multiplexing (optical frequency division multiplexing, OFDM) wave, a frequency-modulation continuous wave (frequency-modulated continuous wave, FMCW), or the like. The echo signal is a reflected signal of the target object for the sensing signal. For example, the access network device may perform specific processing based on the echo signal to generate (or determine or obtain) the sensing data. After obtaining the sensing data through detection, the access network device may send the sensing data to the SF, and the SF processes the sensing data to obtain the sensing information, and provides the sensing information for the initiator of the sensing service. For example, the SF may process the sensing data based on the sensing requirement of the initiator of the sensing service, to obtain the sensing information.

The sensing data includes, for example, point cloud data acquired/collected/obtained by the access network device and/or the terminal device. The sensing data may include at least one type of the following information: speed, range, angle, coordinates, time, energy, and the like. The coordinates in this application may include longitude and latitude and/or geographical coordinates. Time in this application may include a timestamp of data of each sampling point. The energy in this application may include echo energy included in data of each sampling point. The sensing information may be obtained based on point cloud information through cluster analysis, and the sensing information may also be referred to as a sensing result. The sensing information may include target presence, a target type, a quantity of targets, a trajectory, a location, environmental reconstruction (environmental reconstruction), environment imaging, or the like.

The access network device may provide the sensing data for the SF in a plurality of manners. In a possible implementation, the SF may set up a sensing data transmission channel for the access network device, so that the access network device may send the sensing data to the SF by using the sensing data transmission channel. Further, the SF processes the sensing data based on the sensing requirement to obtain the sensing information, and sends the sensing information to the initiator of the sensing service. For example, the sensing data transmission channel may include a channel between the access network device and the UPF network element, a channel between the UPF network element and the SF, and a channel between the SF and the initiator of the sensing service. In other words, a transmission path of the sensing data may be: the access network device (sensing data) → the UPF network element (sensing data) → the SF (obtaining the sensing information based on the sensing data) → the initiator of the sensing service (sensing information). In the transmission path, the data in the brackets indicates data transmission or processing. For example, in the transmission path in the foregoing example, another network element may be further included between network elements. For example, a NEF or another possible network element may be further included between the SF and the initiator of the sensing service. This is not specifically limited. In embodiments of this application, a specific implementation of setup of the sensing data transmission channel is not limited, and "channel" may alternatively be replaced with "tunnel" or another possible name.

It may be understood that the SF in the transmission path may be replaced with a sensing data processing function network element or a sensing function network element. In other words, the sensing data processing function network element may convert the sensing data into sensing information that can be sent to the initiator of the sensing service. Specifically, the SF may set up a sensing data transmission channel for the access network device, so that the access network device may send the sensing data to the sensing data processing function network element. Further, the sensing data processing function network element obtains the sensing information after processing the sensing data based on the sensing requirement, and sends the sensing information to the initiator of the sensing service. In other words, a transmission path of the sensing data is: the access network device (sensing data) → the UPF network element (sensing data) → the sensing data processing function network element (sensing information obtained based on the sensing data) → the initiator of the sensing service (sensing information).

In a current sensing solution, when the access network device performs sensing, because sensing is oriented to an area, the access network device also performs sensing on an object around a target. Therefore, sensing data that is not allowed to be sensed may be collected, causing leakage of sensitive information such as personal privacy, a business secret, or a state secret. Therefore, filtering needs to be performed on the sensitive information for the sensing service to prevent the leakage of the sensitive information.

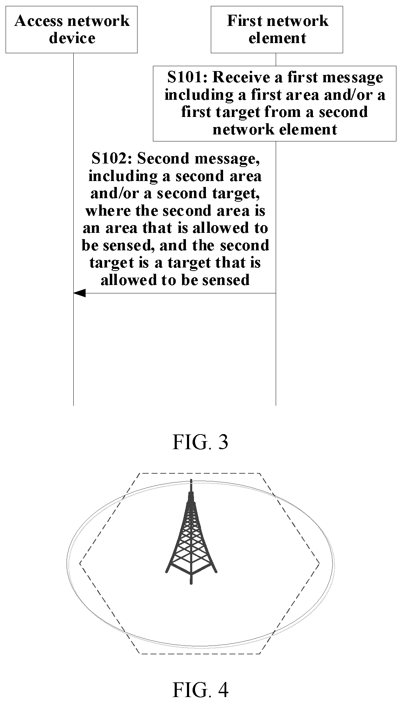

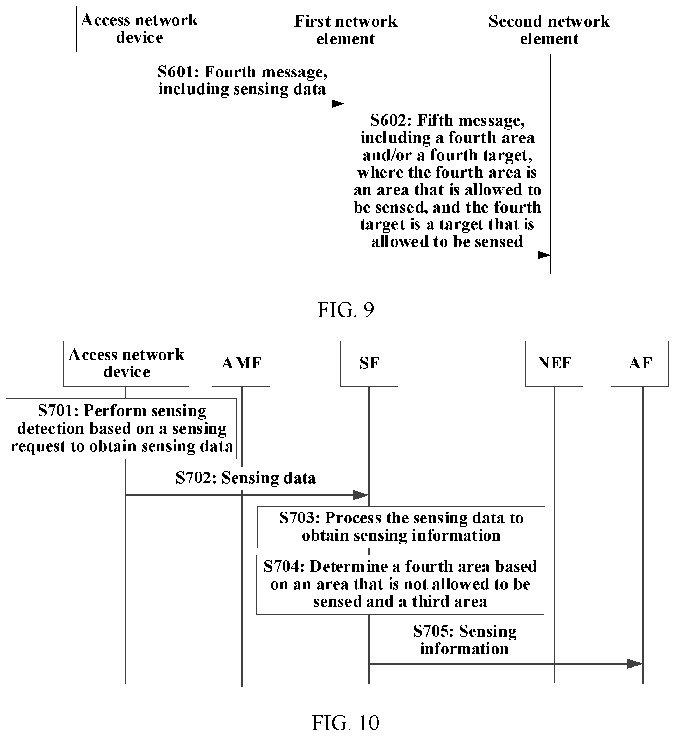

This application provides a communication method, used for filtering sensitive information in a sensing service. According to one aspect, in the communication method provided in this application, sensitive information in sensing requirement information may be filtered, to avoid leakage of the sensitive information. The following describes the method provided in this aspect with reference to procedures shown in FIG. 3 to FIG. 8. In another aspect, in the communication method provided in this application, sensitive information in the sensing information may be filtered, to avoid leakage of the sensitive information. The following describes the method provided in this aspect with reference to FIG. 9 to FIG. 13.

As shown in FIG. 3, a communication method provided in an embodiment of this application may include the following steps.

S101: A first network element receives a first message from a second network element, where the first message is used for requesting sensing information.

In this application, the first network element may be an SF. For another example, when a control plane-user plane separation architecture is used for the SF, the first network element may be an SF-control plane (SF-control plane, SF-C) network element or an SF-user plane (SF-user plane, SF-U) network element. The SF-C network element may be referred to as an SF-C for short, and the SF-U network element may be referred to as an SF-U for short. It may be understood that when the control plane-user plane separation architecture is used for the SF, the SF-U may be configured to process sensing data, for example, generate or obtain sensing information based on sensing data provided by an access network device; and the SF-C may be configured to process other control plane signaling, for example, obtain a sensing request, or is used by the SF to perform signaling and data exchange and transmission with another network element.

In this application, a function of the first message may also be described as follows: The first message is used for carrying a parameter of a sensing service, used for carrying a sensing requirement of a sensing initiator, used for requesting a sensing result, used for requesting sensing information, used for requesting a sensing session, used for requesting a sensing business, used for requesting a sensing service, or the like. The first message may include a sensing service request message, a sensing session request message, a sensing service subscription message, a sensing session subscription message, a sensing information subscription message, a sensing subscription message, a subscription message, a request message, a sensing information requirement, or the like.

In S101, the first message may include a first area. The first area includes an area that is not allowed to be sensed.

In this application, the area that is not allowed to be sensed may also be referred to as a forbidden area, a not allowed area, a sensitive area, a restriction area, a restricted area, or a privacy area.

The first area may include one or more areas. The first area may include one or more areas that are not allowed to be sensed.

In this application, the area may include or be replaced with area information. The area information includes, for example, geographic area information and/or reference area information. The geographic area may include longitude and latitude information, coordinate information, range information, or the like of an area. The reference area may be 3GPP area information, for example, information like a cell identifier, an identifier of the access network device, or a TAI.

In addition, the first message may further include a first target. The first target is a target that is not allowed to be sensed.

In this application, the target that is not allowed to be sensed may also be referred to as a forbidden target, a not allowed target, a sensitive target, a restricted target, a restriction target, or a privacy target.

The first target may include one or more targets. The first target may include one or more targets that are not allowed to be sensed.

In this application, the target may include information about the target, for example, may include a type, a target object, a target identifier, trajectory information of the target, location information of the target, a contour of the target, a gait of the target, or other information. The target type may indicate that a detected target type is a person, a vehicle, an unmanned aerial vehicle, a fruit, or the like. The target object, for example, a specific detected object, may be, for example, a person or a vehicle. The target identifier may be a terminal identifier, for example, a SUPI or an IMSI.

Optionally, the first message may be a sensing request or a sensing request message from an initiator of the sensing service, and the sensing request message may include sensing requirement information. In an example, the first message may be a sensing request from a NEF, an AF, an AS, or a terminal device. The sensing request may include service type information and/or sensing requirement information. The service type information may indicate the sensing service, for example, carry an identifier or a type of the sensing service.

It may be understood that, if the AS or the terminal device is used as the initiator of the sensing service, the NEF and/or the AF may receive the sensing request from the initiator, and send the first message based on the sensing request. In an example, the NEF and/or the AF are/is used as forwarding nodes/a forwarding node, and configured to forward (for example, transparently transmit) the sensing request, where the forwarded sensing request is the first message. In another example, the AF may be deployed in the terminal device, and send the first message or send the first message via the NEF after obtaining the sensing request.

Alternatively, the first message may be a sensing request determined based on the sensing requirement information of the initiator of the sensing service. The sensing requirement information may include a sensing requirement for a sensitive area or a sensitive target (or object). In an example, the NEF or another core network element may determine a sensing request based on sensing requirement information of the AF or the AS, and the sensing request may be used as an example of the first message.

In this application, the sensing requirement information is determined based on a requirement of the sensing service. For example, the sensing requirement information includes sensing target information, sensing area information, sensing quality of service (quality of service, QoS) information, or other requirement information of the sensing service. It may be understood that the sensing requirement information may be from the initiator of the sensing service.

The sensing target information may indicate to sense information such as whether a target of a specific type exists and how many targets of the specific type exist. Therefore, the sensing target information may include type information of the target. For example, for sensing performed near a road, a sensed target may include different types such as an animal (for example, flocks and herds), a pedestrian, or a vehicle, for monitoring whether the target, such as flocks and herds or a pedestrian, enters the road, to reduce a probability of a specific accident. In S101, the sensing target information may be used as an example of the first target.

The sensing area information may indicate a range of an area that is requested to be sensed. For example, the sensing area information may be geographic area information, and the geographic area information may be an area represented by longitude and latitude coordinates. For example, the initiator may include the geographic area information, for example, longitude and latitude information, coordinate information, or range information, in the sensing request based on an area that needs to be sensed, so that the SF controls a base station to sense a corresponding area. For another example, the sensing area information may include reference area information. For example, the reference area information includes 3GPP area information, for example, information such as a cell identifier, a TRP identifier, an identifier of the access network device, an identifier of a CU, an identifier of a DU, an identifier of an RRU, an identifier of an AAU, or a tracking area identifier. In S101, the sensing area information may be used as an example of the first area.

It may be understood that a geographical range corresponding to a 3GPP area is related to deployment or a network configuration of a network device. When the initiator of the sensing service uses a geographic area range as a sensing requirement, requesting to perform sensing only based on the 3GPP area may cause a difference between a sensing range and an actual requirement of the initiator, and consequently, sensing accuracy is reduced. Therefore, the sensing area information carried in the first message may include at least the geographic area information.

For example, as shown in FIG. 4, an elliptical area is a geographical range indicated by geographic area information of the first area, and a dashed hexagon area represents a coverage area of the access network device. If the identifier of the access network device is used as the 3GPP area of the first area, an indication of the first area is inaccurate. Correspondingly, if the access network device senses only the area shown by a dashed line, accuracy of a final sensing result is reduced.

The sensing quality of service information may indicate quality of service of the sensing service requested by the initiator of the sensing service, for example, includes a range resolution, a speed resolution, an angle resolution, a refresh rate, a maximum field of view (field of view, FOV), sensing delay information, or another quality of service parameter, and is used by the access network device to collect and provide, based on the quality of service parameter, sensing data that meets a requirement of the initiator. The sensing delay information may indicate a maximum delay of the sensing service required by the initiator.

In other words, the first message may be used for requesting to sense a sensing range including a sensitive area or object, which may cause leakage of sensitive information.

S102: The first network element sends a second message to the access network device, where the second message may be used for requesting the access network device to perform sensing.

In this application, a function of the second message may be further described as follows: The second message is used for requesting the access network device to perform sensing, used for triggering sensing of the access network device, used for triggering the access network device to perform sensing, used for the access network device to perform sensing, used for sending a sensing service/sensing session parameter to the access network device, used for requesting the access network device to perform configuration, used for requesting the access network device to create a sensing context, used for requesting the access network device to set up a sensing resource, used for requesting the access network device to assign a sensing resource, or used for requesting the access network device to set up a sensing session/sensing service.

The second message may include a second area, and/or include a second target. The second area is an area that is allowed to be sensed, that is, the second area does not include an area that is not allowed to be sensed. The second target is a target that is allowed to be sensed, that is, the second target does not include a target that is not allowed to be sensed.

Based on S102, the access network device receives the second message, and performs sensing based on the second message to obtain the sensing data. Because the second message does not include the area that is not allowed to be sensed and/or the target that is not allowed to be sensed, the access network device can be prevented from obtaining sensing data corresponding to the area that is not allowed to be sensed and/or sensing data corresponding to the target that is not allowed to be sensed, thereby reducing a risk of leakage of sensing data of the sensitive area and/or the sensitive target.

In this application, the sensing data may include point cloud data that is measured, detected, or collected through sensing. For example, the sensing data may be obtained by the terminal device or the access network device through sensing measurement, detection, or collection. Each piece of point cloud data may be understood as a sampling point obtained through electromagnetic wave reflection and analog-to-digital conversion (analog-to-digital conversion, ADC) sampling, and may include coordinates, a range, velocity, angle (range, velocity, angle, RVA), energy information, and the like. The energy information may indicate energy of echo signal energy minus a path loss.

In this application, the SF or the SF-U may process the point cloud data reported by the access network device, for example, perform clustering on points and data association. Clustering may be understood as clustering of sampling points included in a single radio frame. For example, a Euclidean distance between the point cloud data is calculated based on a related attribute of the point cloud data. Points less than a threshold may form a clustering cluster (for example, a clustering algorithm like DBSCAN or K-means may be used for clustering). Data association may include data association between a plurality of radio frames of a single station, for example, data association is performed on point cloud data of a single base station based on a joint probabilistic data association (joint probabilistic data association, JPDA) algorithm. After the foregoing operations are performed, clustering clusters may be formed one by one, and the clustering cluster also includes attributes such as a location, an RVA, or energy information. Further, the SF may form a sensing result based on the clustering cluster, for example, obtain a result such as target presence, a quantity of targets, a trajectory, or target type identification. Further, the SF or the SF-U may feed back information to the initiator of the sensing service to indicate the sensing result.

In this application, the first network element may determine the second area and/or the second target, or a third network element other than the first network element may determine the second area and/or the second target. The third network element may be, for example, a network element configured to filter the sensitive area and/or the sensitive target, or configured to store or provide information about the area that is not allowed to be sensed and/or the target that is not allowed to be sensed. The third network element may be another core network element other than the first network element, for example, a core network element such as a UDM, an NRF, or a UDSF. For another example, the third network element may be a network element specially configured to store or provide the information about the area that is not allowed to be sensed and/or the target that is not allowed to be sensed, for example, referred to as a sensitive target management network element, a sensitive area management network element, or a sensitive area and sensitive target management network element. In addition, the first network element may alternatively be the SF-U, and correspondingly, the third network element may be the SF-C.

With reference to Embodiment 1 to Embodiment 4, the following describes a manner of determining the second area and the second target in S102.

In Embodiment 1, the first network element is the SF, and the SF may determine the second area based on the area that is not allowed to be sensed and the first area. For example, the area that is not allowed to be sensed is deleted from the first area. In Embodiment 1, the area that is not allowed to be sensed may be configured on the SF, or the SF may receive the area that is not allowed to be sensed from the third network element.

The area that is not allowed to be sensed may include geographic area information and/or 3GPP area information that are/is not allowed to be sensed.

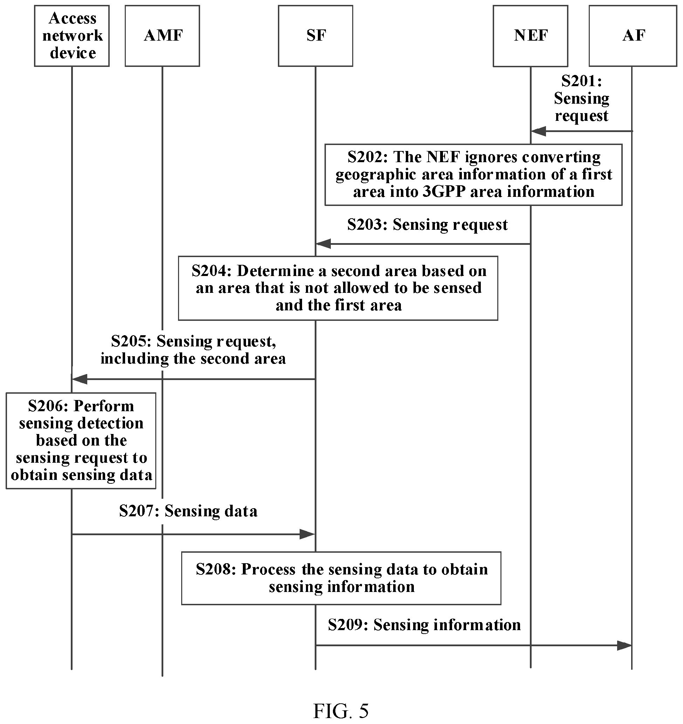

As shown in FIG. 5, when the SF determines the second area based on the area that is not allowed to be sensed and the first area, the method provided in this embodiment of this application may include the following steps.

S201: The initiator of the sensing service sends the sensing request.

Correspondingly, the NEF receives the sensing request.

The sensing request may include a sensing service type and sensing requirement information. The sensing requirement information includes the first area, indicating a requirement of the initiator for sensing an area, and the first area is an area that the initiator requires to sense. The first area includes geographic area information of the first area.

Optionally, FIG. 5 is described by using an example in which the initiator of the sensing service is the AF.

S202: Optionally, the NEF may ignore/not converting/convert the geographic area information of the first area in the sensing request into 3GPP area information. Alternatively, optionally, the NEF does not perform area conversion on the geographic area information of the first area, and includes the geographic area information of the first area in the sensing request sent to the SF. It may be understood that there may be a difference between an actual range indicated by the 3GPP area information obtained through conversion and a range of the geographic area information of the first area, and the area indicated by the geographic area information of the first area better meets the sensing area requirement of the initiator of the sensing service.

Correspondingly, the NEF may send the sensing request to the SF, where the sensing request may include the service type information and the sensing requirement information, and the sensing requirement information may include the geographic area information and/or the 3GPP area information of the first area.

It may be understood that, in a case in which the NEF does not convert the first area into the 3GPP area information, the NEF may not process the sensing request from the initiator of the sensing service. For example, the NEF transparently transmits the sensing request of the initiator of the sensing service to the SF, or forwards the sensing request to the SF. In this case, the sensing request from the AF may be used as an example of the first message in S101.

It may be further understood that, if the NEF processes a sensing message from the initiator of the sensing service, for example, converts the geographic area information of the first area into the 3GPP area information, the NEF may send a new sensing request to the SF. The new sensing request may be used as an example of the first message in S101.

S203: The SF receives the sensing request.

The sensing request may include geographic area information and/or 3GPP area information of the sensing area.

S204: The SF determines the second area based on the area that is not allowed to be sensed and the first area.

Based on S204, the SF may filter the area that is not allowed to be sensed in the first area. For example, the SF may delete/fuzzify (for example, perform fuzzification processing on the area that is not allowed to be sensed) the area that is not allowed to be sensed from the first area.

In an implementation, the area that is not allowed to be sensed may be obtained by the SF from local information. For example, the SF obtains, based on a configuration of a network management network element or a local configuration, the area that is not allowed to be sensed.

In another implementation, the area that is not allowed to be sensed may be received by the SF from another network element. For example, the SF receives the area that is not allowed to be sensed from the third network element. The third network element may obtain, based on a configuration of the network management network element or a local configuration, the area that is not allowed to be sensed. After obtaining the sensing request and/or the area information of the first area based on S203, the SF may send a sensitive area information request to another network element, where the sensitive area information request is used for requesting the area that is not allowed to be sensed; and receive the area that is not allowed to be sensed from the another network element. Alternatively, after the SF goes online or registers, the SF may send a sensitive area information request to another network element, and receive the area that is not allowed to be sensed.

It may be understood that, in this application, an operator may contract with a manager, an initiator, or a demander of a sensitive area, and configure a subscribed area that is not allowed to be sensed to the first network element and/or the third network element.

S205: The SF sends the sensing request to the access network device.

The sensing request may include the service type and the sensing requirement information. The sensing requirement information may include the second area, for example, include geographic area information and/or 3GPP area information of the second area. In addition, for the service type information and the sensing requirement information, refer to the descriptions of S201.

Optionally, the access network device may be determined based on the second area. For example, the SF determines, based on the second area, an access network device in the second area and/or near the second area, so that the SF sends the sensing request to the access network device. It may be understood that the second area may include the geographic area information of the second area, to further accurately determine the access network device configured to sense the second area, thereby improving sensing accuracy.

Based on S205, the SF may send, to the access network device, the sensing request obtained through sensitive area filtering.

Optionally, in S205, the SF may send the sensing request to the access network device via the AMF.

It may be understood that the sensing request in S205 may be used as an example of the second message in S102.

S206: The access network device performs sensing detection or sensing measurement based on the sensing request to obtain sensing data.

For example, the access network device in the second area sends a sensing signal, receives an echo signal, and performs processing based on the echo signal to obtain the sensing data.

It may be understood that because the second area is an area that is allowed to be sensed, the sensing data obtained in S206 corresponds to the area that is allowed to be sensed. For example, the sensing data corresponds to the area that is allowed to be sensed.

In this application, the sensing data includes, for example, point cloud data. For the point cloud data, refer to the descriptions in this application.

S207: The access network device sends the sensing data to the SF.

Optionally, the access network device may send the sensing data to the SF via a sensing transmission channel. The sensing transmission channel may include a session between the access network device and the UPF. The session may be set up by using control plane signaling. For example, after receiving the sensing request shown in S205, the access network device triggers session setup.

S208: The SF processes the sensing data to obtain sensing information.

The sensing information includes, for example, a sensing result corresponding to the second area. For example, the SF processes the sensing data that corresponds to the second area and that is provided by the access network device, for example, performs clustering and data association, to form clustering clusters one by one. Further, the SF may form, based on the clustering cluster, the sensing result corresponding to the second area.

S209: The SF sends the sensing information to the initiator of the sensing service.

Optionally, the SF may send the sensing information to the NEF, and then the NEF sends the sensing information to the AF.

Based on the procedure shown in FIG. 5, the SF may exclude the area that is not allowed to be sensed in the first area to obtain the second area, so that the access network device senses the second area; and the SF processes the sensing data provided by the access network device to obtain the sensing information. Because the sensing data is performed based on the second area, sensing on the area that is not allowed to be sensed can be avoided, and leakage of sensitive information can be avoided.

In addition, in Embodiment 1, the SF may further determine the second target based on the target that is not allowed to be sensed and the first target, for example, delete the target that is not allowed to be sensed from the first target. For an implementation, refer to the manner of determining the second area by the SF shown in FIG. 5. Details are not described again. For example, the sensing request shown in S201 in FIG. 5 further includes the first target, and the first target includes the target that is not allowed to be sensed. In addition, the "area" in FIG. 5 is replaced with the "target".

It may be understood that the target that is not allowed to be sensed may be configured on the SF, or the SF may receive a target that is not allowed to be sensed from another network element. For example, the another network element includes a UDM, an NRF, a UDSF, the third network element, or another core network element, a network management network element, or the like.

In Embodiment 2, the first network element is the SF-C, and the SF-C may determine the second area based on the area that is not allowed to be sensed and the first area. In Embodiment 2, the area that is not allowed to be sensed may be configured on the SF-C, or the SF-C may receive the area that is not allowed to be sensed from the third network element.

The area that is not allowed to be sensed may include geographic area information and/or 3GPP area information that are/is not allowed to be sensed.

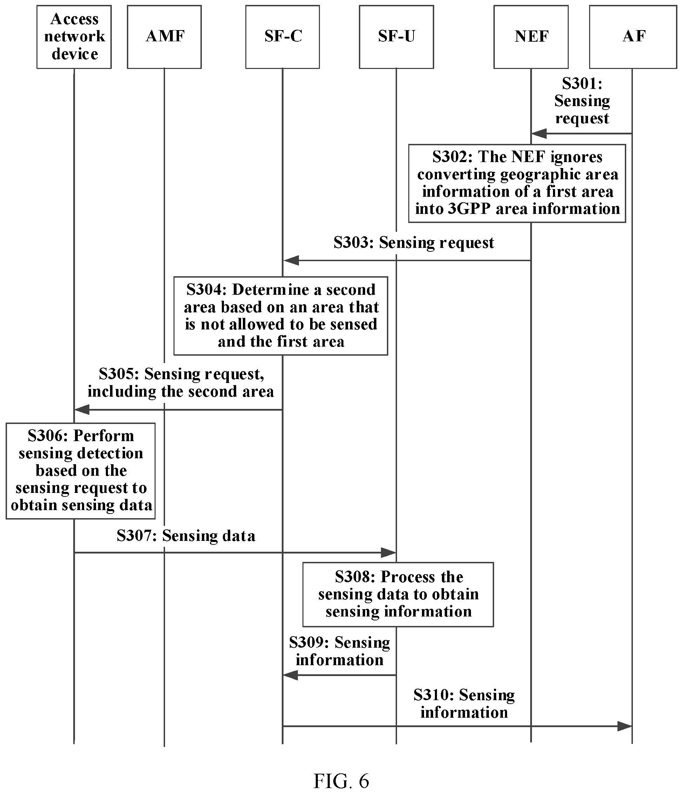

As shown in FIG. 6, when the SF-C determines the second area based on the area that is not allowed to be sensed and the first area, the method provided in this embodiment of this application may include the following steps.

For S301 and S302, refer to S201 and S202.

S303: The SF-C receives the sensing request.

The sensing request may include geographic area information and/or 3GPP area information of the sensing area.

S304: The SF-C determines the second area based on the area that is not allowed to be sensed and the first area.

Based on S304, the SF-C may filter the area that is not allowed to be sensed in the first area. For example, the SF-C may delete the area that is not allowed to be sensed from the first area.

For S304, refer to S204. A difference lies in that the SF in S204 may be replaced with the SF-C.

S305: The SF-C sends the sensing request to the access network device.

S306: The access network device performs sensing detection based on the sensing request to obtain the sensing data.

For S305 and S306, refer to S205 and S206 for implementation.

S307: The access network device sends the sensing data to the SF-U.

Optionally, the access network device may send the sensing data to the SF-U via a sensing transmission channel. The sensing transmission channel may include a session between the access network device and the UPF. The session may be set up by using control plane signaling. For example, after receiving the sensing request shown in S305, the access network device triggers session setup.

S308: The SF-U processes the sensing data to obtain sensing information.

For S307 and S308, refer to S207 and S208. A difference lies in that the SF is replaced with the SF-U.

S309: The SF-U sends the sensing information to the SF-C.

A communication process between the SF-U and the SF-C may be performed through an interface between the SF-C and the SF-U.

S310: The SF-C sends the sensing information to the initiator of the sensing service.

For S310, refer to S209. A difference lies in that the SF in S209 is replaced with the SF-C.

Based on the procedure shown in FIG. 6, the SF-C may exclude the area that is not allowed to be sensed in the first area to obtain the second area, so that the access network device senses the second area. In addition, in the C-U separation architecture, the SF-U may further process the sensing data provided by the access network device to obtain the sensing information. Because the sensing data is collected or obtained for second area sensing, sensing on the area that is not allowed to be sensed can be avoided, and leakage of sensitive information can be avoided.

In addition, in Embodiment 2, the SF-C may further determine the second target based on the target that is not allowed to be sensed and the first target, for example, delete the target that is not allowed to be sensed from the first target. For an implementation, refer to the manner of determining the second area by the SF-C shown in FIG. 6. Details are not described again. For example, the sensing request shown in S301 in FIG. 6 further includes the first target, and the first target includes the target that is not allowed to be sensed. In addition, the "area" in FIG. 6 is replaced with the "target".

It may be understood that the target that is not allowed to be sensed may be configured on the SF-C, or the SF-C may receive the target that is not allowed to be sensed from another network element. For example, the another network element includes a UDM, an NRF, a UDSF, the third network element, or another core network element, a network management network element, or the like.

In another possible embodiment, the third network element may determine the second area based on the area that is not allowed to be sensed and the first area; and/or the third network element may determine the second target based on the target that is not allowed to be sensed and the first target.

In Embodiment 3, the first network element is the SF, the first network element may send the first area to the third network element, and the third network element determines the second area based on the area that is not allowed to be sensed and the first area. For example, the third network element may delete the area that is not allowed to be sensed from the first area. In Embodiment 3, the area that is not allowed to be sensed may be configured on the third network element, or the third network element may receive the area that is not allowed to be sensed from another network element.

The area that is not allowed to be sensed may include an area that is not allowed to be sensed and/or 3GPP area information.

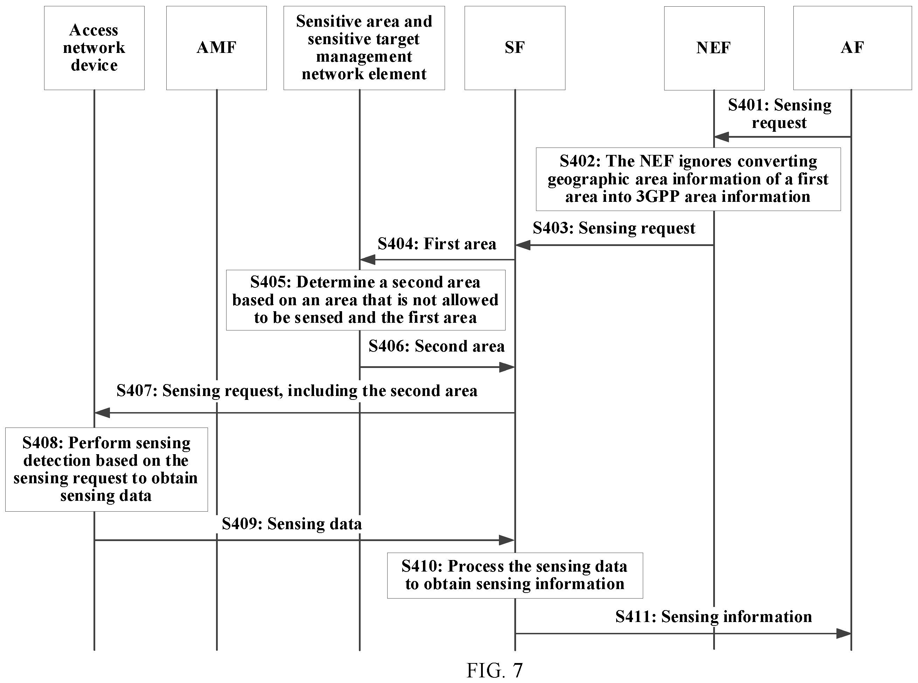

As shown in FIG. 7, an example in which the third network element is a sensitive area and sensitive target management network element is used. When the third network element determines the second area based on the area that is not allowed to be sensed and the first area, the method provided in this embodiment of this application may include the following steps.

For S401 to S403, refer to S201 to S203.

S404: The SF sends the first area to the sensitive area and sensitive target management network element.

For example, the first area is included in a sensitive area filtering request, a sensitive area authentication request, an area authentication request, or a sensing area authentication request.

The sensitive area filtering request may be used for requesting to filter the area that is not allowed to be sensed in the first area.

Optionally, when location information of an area that is not allowed to be filtered is not configured in local information, the SF may send the request to the sensitive area and sensitive target management network element, to request the sensitive area and sensitive target management network element to filter the area that is not allowed to be sensed in the first area.

S405: The sensitive area and sensitive target management network element determines the second area based on the area that is not allowed to be sensed and the first area.

Based on S405, the sensitive area and sensitive target management network element may filter the area that is not allowed to be sensed in the first area. For example, the sensitive area and sensitive target management network element may delete the area that is not allowed to be sensed from the first area.

In an implementation, the area that is not allowed to be sensed may be obtained by the sensitive area and sensitive target management network element from local information. For example, the sensitive area and sensitive target management network element obtains, based on a configuration of the network management network element or a local configuration, the area that is not allowed to be sensed.

In another implementation, the area that is not allowed to be sensed may be received by the sensitive area and sensitive target management network element from another network element. For example, the sensitive area and sensitive target management network element receives the area that is not allowed to be sensed from a UDM, an NRF, or a UDSF, or another core network element, or a network management network element. For example, after going online or registering, the sensitive area and sensitive target management network element may send a sensitive area information request to another network element, and receive the area that is not allowed to be sensed.

It may be understood that, in this application, an operator may contract with a manager, an initiator, or a requester of the sensitive area, and configure the subscribed area that is not allowed to be sensed to the sensitive area and sensitive target management network element or another network element.

S406: The sensitive area and sensitive target management network element sends the second area to the SF.

The second area may be included in a sensitive area filtering response message.

For S407 to S411, refer to S205 to S209.

Based on the procedure shown in FIG. 7, the sensitive area and sensitive target management network element may exclude the area that is not allowed to be sensed in the first area to obtain the second area, and the sensitive area and sensitive target management network element provides, for the SF, information that is about the second area and that is obtained through filtering. The SF may further send a sensing request including the information about the second area to the access network device, so that the access network device senses the second area, and the SF processes sensing data provided by the access network device to obtain sensing information. Because the sensing data is performed based on the second area, sensing on the area that is not allowed to be sensed can be avoided, and leakage of sensitive information can be avoided.

In addition, in Embodiment 3, the third network element may further determine the second target based on the target that is not allowed to be sensed and the first target, for example, delete the target that is not allowed to be sensed from the first target. For an implementation, refer to the manner of determining the second area by the SF shown in FIG. 7. Details are not described again. For example, the sensing request shown in S401 in FIG. 7 further includes the first target, and the first target includes the target that is not allowed to be sensed. In addition, the "area" in FIG. 7 is replaced with the "target".

It may be understood that the target that is not allowed to be sensed may be configured on the third network element, or the third network element may receive the target that is not allowed to be sensed from another network element. For example, the another network element includes a UDM, an NRF, a UDSF, or another core network element, a network management network element, or the like.

In Embodiment 4, the first network element is the SF-C, the first network element may send the first area to the third network element, and the third network element determines the second area based on the area that is not allowed to be sensed and the first area. For example, the third network element may delete the area that is not allowed to be sensed from the first area. In Embodiment 4, the area that is not allowed to be sensed may be configured on the third network element, or the third network element may receive the area that is not allowed to be sensed from another network element.

The area that is not allowed to be sensed may include an area that is not allowed to be sensed and/or 3GPP area information.

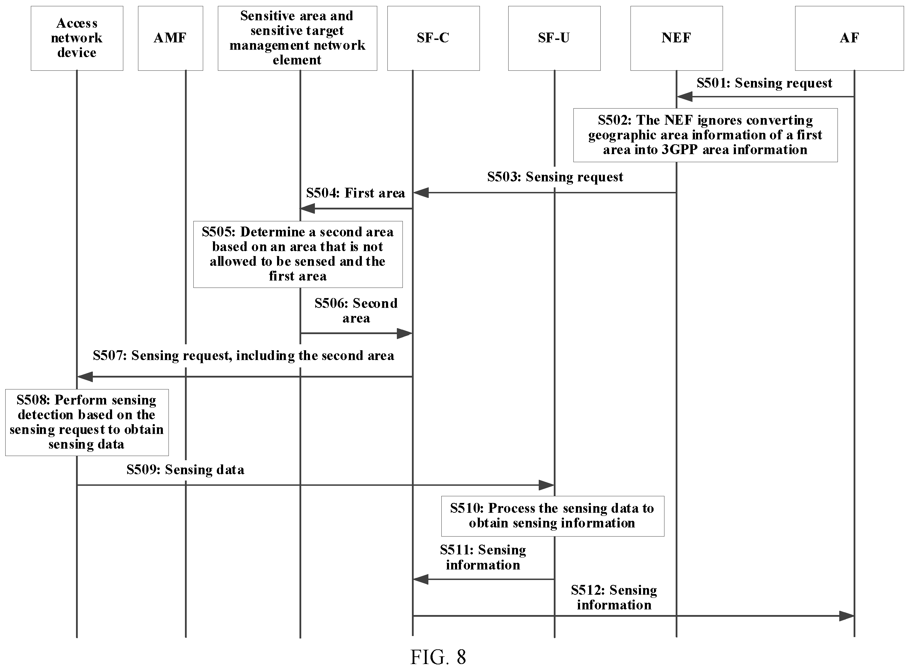

As shown in FIG. 8, an example in which the third network element is a sensitive area and sensitive target management network element is used. When the third network element determines the second area based on the area that is not allowed to be sensed and the first area, the method provided in this embodiment of this application may include the following steps.

For S501 and S502, refer to S201 and S202.

S503: The SF-C receives the sensing request.

The sensing request may include geographic area information and/or 3GPP area information of the sensing area.

S504: The SF-C sends the first area to the sensitive area and sensitive target management network element.

For example, the first area is included in a sensitive area filtering request.

The sensitive area filtering request may be used for requesting to filter the area that is not allowed to be sensed in the first area.

Optionally, when an area that is not allowed to be filtered is not configured in local information, the SF-C may send the request to the sensitive area and sensitive target management network element, to request the sensitive area and sensitive target management network element to filter the area that is not allowed to be sensed in the first area.

For S505, refer to S405.

Based on S505, the sensitive area and sensitive target management network element may filter the area that is not allowed to be sensed in the first area.

S506: The sensitive area and sensitive target management network element sends the second area to the SF-C.

The second area may be included in a sensitive area filtering response message.

For S507 to S512, refer to S305 to S310.

Based on the procedure shown in FIG. 8, the sensitive area and sensitive target management network element may exclude the area that is not allowed to be sensed in the first area to obtain the second area, so that the access network device senses the second area. In addition, in the C-U separation architecture of the SF, the SF-U may further process sensing data provided by the access network device to obtain sensing information. Because the sensing data is performed based on the second area, sensing on the area that is not allowed to be sensed can be avoided, and leakage of sensitive information can be avoided.

In addition, in Embodiment 4, the third network element may further determine the second target based on the target that is not allowed to be sensed and the first target, for example, delete the target that is not allowed to be sensed from the first target. For an implementation, refer to the manner of determining the second area by the third network element shown in FIG. 8. Details are not described again. For example, the sensing request shown in S501 in FIG. 8 further includes the first target, and the first target includes the target that is not allowed to be sensed. In addition, the "area" in FIG. 8 is replaced with the "target".

It may be understood that the target that is not allowed to be sensed may be configured on the third network element, or the third network element may receive the target that is not allowed to be sensed from another network element. For example, the another network element includes a UDM, an NRF, a UDSF, or another core network element, a network management network element, or the like.

The foregoing describes the manner of determining the second area and the second target with reference to FIG. 5 to FIG. 8 and corresponding embodiments. It may be understood that, in addition to the steps of the foregoing procedure instances, this application may be further applied to another scenario in which the C-U separation architecture is used or not used for the SF, to implement information anonymization in a sensing scenario. For example, in addition to the content of the foregoing procedure example, the SF-U may determine the second area and/or the second target, and the SF-C is only configured to interact with another network element, for example, is configured to send the second message, and does not undertake a filtering function.

For example, as shown in FIG. 9, a communication method provided in an embodiment of this application may include the following steps.

S601: A first network element receives a fourth message from an access network device. The fourth message may include sensing data.

For example, the fourth message may be used for carrying the sensing data, and for example, may be a sensing response message sent by a base station to the first network element.

The fourth message may include point cloud data. As described in this application, the point cloud data may include coordinates.

As described in this application, the sensing data may include at least one of the following information: speed, range, angle, coordinates, time, energy, and the like. The sensing data or sensing measurement data may be obtained by a terminal device and/or the access network device by processing a sensing signal. In the following, that the access network device is used as a collector of the sensing data is used merely as an example, but it should not be understood that only the access network device can produce the sensing data.

Based on S601, the first network element or another network element may process the sensing data to obtain sensing information.

In an example, if the first network element is an SF, the first network element may process the sensing data and obtain the sensing information. A process in which the first network element may determine an area and/or a target based on the sensing data may include: processing the sensing data, for example, performing operations such as clustering and tracking filtering, to obtain a sensing result. For example, the sensing result may include information about the target. For example, the information about the target includes a location, a trajectory, a contour, an identification result, a gait, and other information of the target.

It may be understood that, in the procedure shown in FIG. 9, the sensing information obtained based on fourth data may include a third area and/or a third target. For example, the sensing information includes a sensing result of the third area, for example, includes area information of the third area and/or a location, a trajectory, and a contour, and other information of at least one of a target in the third area; and/or the sensing information includes a sensing result corresponding to the third target, for example, includes a location, a trajectory, a contour, an identification result, a gait, and other information of the third target.

The third area may include an area that is not allowed to be sensed, and the third target may include a target that is not allowed to be sensed. For the third area, refer to the descriptions of the first area. For the third target, refer to the descriptions of the first target. In other words, the sensing information obtained based on the sensing data in the fourth message may include sensitive information, and anonymization processing needs to be performed to obtain a fourth area and/or a fourth target shown in S602.

S602: The first network element sends a fifth message to a second network element. The fifth message includes the fourth area and/or the fourth target. The fourth area is an area that is allowed to be sensed, and the fourth target is a target that is allowed to be sensed.

The fifth message may be used for carrying sensing information. For example, the fifth message is a sensing result report message. It may be understood that the sensing information carried in the fifth message is sensing information obtained through anonymization processing.

In the procedure shown in FIG. 9, the first network element may send sensing information obtained through anonymization, that is, the sensing information includes only an area that is allowed to be sensed and/or a target that is allowed to be sensed, to implement anonymization of a sensing service.

In an implementation of anonymization processing, the first network element may perform anonymization processing. Anonymization processing on the third area may mean that the first network element determines the fourth area based on the area that is not allowed to be sensed and the third area. For example, the first network element deletes/fuzzifies the area that is not allowed to be sensed from the third area to obtain the fourth area. Anonymization processing on the third target may mean that the first network element determines the fourth target based on the target that is not allowed to be sensed and the third target. For example, the first network element deletes/fuzzifies the target that is not allowed to be sensed from the third area to obtain the fourth target.

In addition, in another implementation of anonymization processing, the third network element may perform anonymization processing. For example, the first network element sends the third area to the third network element, and the third network element determines the fourth area based on the area that is not allowed to be sensed and the third area, and sends the fourth area to the first network element. The third network element may delete the area that is not allowed to be sensed from the third area to obtain the fourth area. For another example, the first network element sends the third target to the third network element, and the third network element determines the fourth target based on the target that is not allowed to be sensed and the third target, and sends the fourth target to the first network element. The third network element may delete the target that is not allowed to be sensed from the third target to obtain the fourth target.

The third network element may be an SF-C, a UDM, an NRF, a UDSF, or another core network element, or may be a sensitive target management network element, a sensitive area management network element, or a sensitive area and sensitive target management network element.

In another embodiment similar to the procedure in FIG. 9, when a C-U separation architecture is used for an SF, in S601, the first network element may be an SF-U. In this case, the SF-U may process the sensing data and obtain the sensing information. In addition, S602 may be replaced with S602-1: An SF-C (or a fourth network element) sends the fifth message to the second network element. For the fifth message, refer to the descriptions of S602. The second network element is, for example, an initiator of the sensing service.

In an example of the architecture, the third network element may perform filtering on the third area and/or the third target included in the sensing information to obtain the fourth area and/or the fourth target. In this case, the third network element may be a UDM, an NRF, a UDSF, or another core network element, or may be a sensitive target management network element, a sensitive area management network element, or a sensitive area and sensitive target management network element.

If the third network element is a UDM, an NRF, a UDSF, or another core network element, or may be a sensitive target management network element, a sensitive area management network element, or a sensitive area and sensitive target management network element, before S602-1, the third network element may receive the third area and/or the third target from the SF-C, or may receive the third area and/or the third target from the SF-U. The third network element may further send the fourth area and/or the fourth target to the SF-C.

In another example of the architecture, before S602-1, the SF-C may further perform filtering on the third area and/or the third target included in the sensing information, and before S602-1, the third network element may receive the third area and/or the third target from the SF-U.

In another embodiment similar to the procedure in FIG. 9, when a C-U separation architecture is used for an SF, an SF-U may also support filtering on the third area and/or the third target included in the sensing information to obtain the fourth area and/or the fourth target. In this case, the SF-U may be used as the first network element in FIG. 9, that is, the SF-U performs S601 and S602. Alternatively, S601 may be performed by the SF-U, and S602 is replaced with S602-2: The SF-U sends the fifth message to an SF-C, and the SF-C sends the fifth message to the second network element. For the fifth message, refer to the descriptions of S602.

It may be understood that the communication method shown in FIG. 9 may be implemented in combination with the communication method shown in FIG. 3, or may be implemented independently of the communication method shown in FIG. 3. If the communication method shown in FIG. 9 is implemented in combination with the communication method shown in FIG. 3, optionally, the third area may include an area that is not allowed to be sensed other than the second area; the third target may include a target that is not allowed to be sensed other than the second target; the fourth area may be the same as or different from the second area; and the fourth target may be the same as or different from the second target.

With reference to Embodiment 5 to Embodiment 8, the following describes a manner of determining the fourth area and the fourth target in S102.

In Embodiment 5, the first network element is the SF, and the SF may determine the fourth area based on the area that is not allowed to be sensed and the third area. As shown in FIG. 10, when the SF determines the fourth area based on the area that is not allowed to be sensed and the third area, the method provided in this embodiment of this application may include the following steps.

S701: The access network device performs sensing detection based on the sensing request to obtain the sensing data.

For example, the access network device sends a sensing signal based on sensing area information, receives an echo signal, and performs processing based on the echo signal to obtain the sensing data. The sensing data includes, for example, point cloud data.

In this embodiment, the sensing request may include a sensing requirement of a requester of a sensing service. For a specific implementation, refer to the descriptions in this application. Details are not described again.

It may be understood that, when the procedure shown in FIG. 3 and the procedure shown in FIG. 9 are implemented in combination, the sensing request in S701 may be the second message in S102, or may be the sensing request shown in S205, S305, S407, or S507. When the procedure shown in FIG. 9 is implemented independently of the procedure shown in FIG. 3, the sensing request in S701 may be a sensing request determined based on a sensing requirement of a requester of a sensing service, and sensitive information exclusion may not be performed on sensing area information and/or sensing target information in the sensing request.

S702: The access network device sends the sensing data to the SF.

For an implementation of S702, refer to S207.

S702 may be used as an example of S601.

S703: The SF processes the sensing data to obtain sensing information.

The sensing information includes information about the third area, or includes sensing information corresponding to the third area.

S704: The SF determines the fourth area based on the area that is not allowed to be sensed and the third area.

Based on S704, the SF may filter the area that is not allowed to be sensed in the third area. For example, the SF may delete the area that is not allowed to be sensed from the third area, or delete, from the sensing information corresponding to the third area, sensing information corresponding to the area that is not allowed to be sensed.

With reference to the descriptions of S204, the area that is not allowed to be sensed may be obtained by the SF from local information, or may be received by the SF from another network element.

S705: The SF sends the sensing information to an initiator of the sensing service.

The sensing information includes information about the fourth area, or the sensing information does not include the area that is not allowed to be sensed.

For an implementation of S705, refer to S209. Details are not described again.

S705 may be used as an example of S602.

In addition, in Embodiment 5, the SF may further determine the sensing information based on the sensing data, and determine, when the sensing information includes the target that is not allowed to be sensed, the fourth target based on the target that is not allowed to be sensed and the third target. For example, the SF may delete the target that is not allowed to be sensed from the third target. For an implementation, refer to the manner of determining the fourth area by the SF shown in FIG. 10. Details are not described again. For example, the sensing information shown in S703 in FIG. 10 further includes the third target, and the third target includes the target that is not allowed to be sensed. In addition, the "area" in FIG. 10 may be replaced with the "target".

It may be understood that the target that is not allowed to be sensed may be configured on the SF in Embodiment 5, or the SF may receive the target that is not allowed to be sensed from another network element. For example, the another network element includes a UDM, an NRF, a UDSF, the third network element, or another core network element, a network management network element, or the like.

In Embodiment 6, the first network element is an SF-U, and the SF-C may be used as a third network element to determine the fourth area based on the area that is not allowed to be sensed and the third area. In Embodiment 6, an area that is not allowed to be sensed may be configured on the SF-C, or the SF-C may receive an area that is not allowed to be sensed from another network element.

The area that is not allowed to be sensed may include geographic area information and/or 3GPP area information of the area that is not allowed to be sensed.

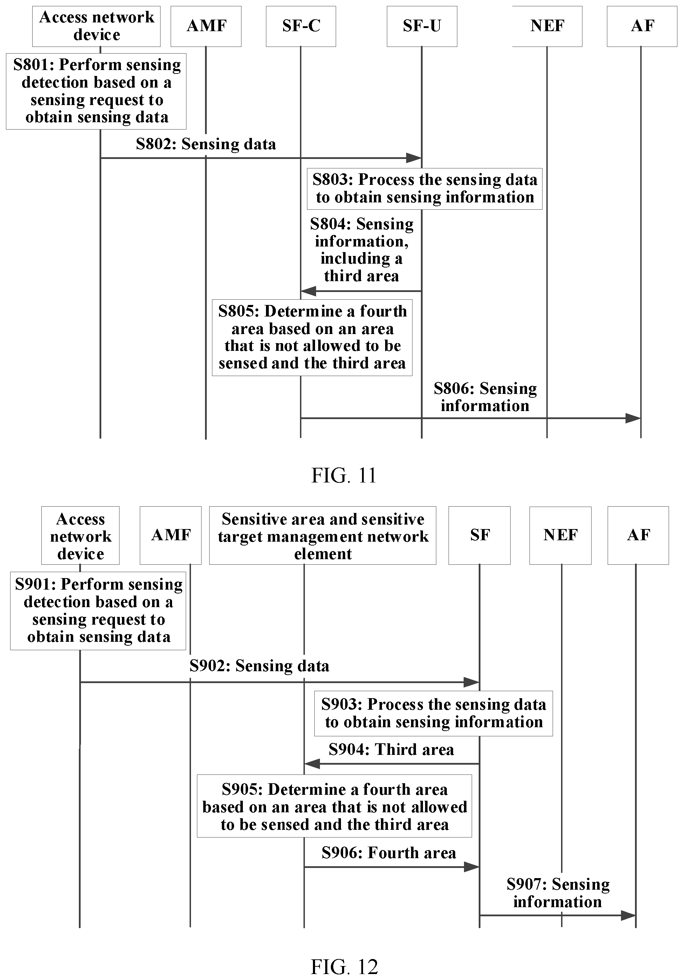

As shown in FIG. 11, when the SF-C determines the fourth area based on the area that is not allowed to be sensed and the third area, the method provided in this embodiment of this application may include the following steps.

For S801, refer to S701.

S802: The access network device sends the sensing data to the SF-U.

For an implementation of S802, refer to S307.

S803: The SF-U processes the sensing data to obtain sensing information.

The sensing information may include information about the third area, or include sensing information corresponding to the third area.

S804: The SF-U sends the sensing information to the SF-C, where the sensing information includes the third area.

A communication process between the SF-U and the SF-C may be performed through an interface between the SF-C and the SF-U.

Optionally, in S804, the sensing information may include the third area and sensing information corresponding to the third area, and optionally, may further include other sensing information other than the sensing information of the third area.

S805: The SF-C determines the fourth area based on the area that is not allowed to be sensed and the third area.

Based on S805, the SF-C may filter the area that is not allowed to be sensed in the third area. For example, the SF-C may delete the area that is not allowed to be sensed from the third area, or delete, from the sensing information provided by the SF-U, sensing information corresponding to the area that is not allowed to be sensed.

With reference to the descriptions in S304 and S204, the area that is not allowed to be sensed may be obtained by the SF-C from local information, or may be received by the SF from another network element.

S806: The SF-C sends the sensing information to an initiator of a sensing service.

The sensing information includes information about the fourth area, or the sensing information does not include the area that is not allowed to be sensed.

FIG. 11 is described by using an example in which the initiator of the sensing service is an AF.

It may be understood that, in the procedure shown in FIG. 11, in a C-U separation architecture of the SF, S802 may be used as an example of S601. To be specific, the SF-U receives the fourth message from a base station. The SF-C is used as an example of the third network element, and the SF-U is used as an example of the first network element. Correspondingly, a fifth message may include the sensing information in S806, that is, S806 may be used as an example of S602-1. In addition, based on S805, the SF-C may be used as the third network element to filter sensitive information in a sensitive area.

In addition, in Embodiment 6, the SF-C may further determine the fourth target based on the target that is not allowed to be sensed and the third target, for example, delete the target that is not allowed to be sensed from the third target. For an implementation, refer to the manner of determining the fourth area by the SF-C shown in FIG. 11. For example, the "area" in FIG. 11 is replaced with the "target".

It may be understood that the target that is not allowed to be sensed may be configured on the SF-C, or the SF-C may receive the target that is not allowed to be sensed from another network element. For example, the another network element includes a UDM, an NRF, a UDSF, the third network element, or another core network element, a network management network element, or the like.

In Embodiment 7, the first network element is an SF, the first network element may send the third area to the third network element, and the third network element determines the fourth area based on the area that is not allowed to be sensed and the third area. For example, the third network element may delete the area that is not allowed to be sensed from the third area, and send the fourth area to the first network element. In Embodiment 7, the area that is not allowed to be sensed may be configured on the third network element, or the third network element may receive the area that is not allowed to be sensed from another network element.

The area that is not allowed to be sensed may include an area that is not allowed to be sensed and/or 3GPP area information.

As shown in FIG. 12, an example in which the third network element is a sensitive area and sensitive target management network element is used. When the third network element determines the fourth area based on the area that is not allowed to be sensed and the third area, the method provided in this embodiment of this application may include the following steps.

For S901 to S903, refer to S701 to S703.

S902 may be used as an example of S601.

S904: The SF sends the third area to the sensitive area and sensitive target management network element.

For example, the third area is included in a sensitive area filtering request.

The sensitive area filtering request may be used for requesting to filter an area that is not allowed to be sensed in the third area.

S905: The sensitive area and sensitive target management network element determines the fourth area based on the area that is not allowed to be sensed and the third area.

Based on S904, the sensitive area and sensitive target management network element may filter the area that is not allowed to be sensed in the third area. For example, the SF may delete the area that is not allowed to be sensed from the third area.

With reference to the descriptions in S405, the area that is not allowed to be sensed may be obtained by the sensitive area and sensitive target management network element from local information, or may be received by the sensitive area and sensitive target management network element from another network element.

S906: The sensitive area and sensitive target management network element sends the fourth area to the SF.

S907: The SF sends the sensing information to the initiator of the sensing service. The sensing information includes information about the fourth area, or the sensing information does not include the area that is not allowed to be sensed.

For an implementation of S907, refer to S209. Details are not described again.

In the procedure shown in FIG. 12, S907 may be used as an example of S602.

In addition, in Embodiment 7, the sensitive area and sensitive target management network element may further determine a fourth target based on a target that is not allowed to be sensed and a third target, for example, delete the target that is not allowed to be sensed from the third target. For an implementation, refer to the manner of determining the fourth area by the sensitive area and sensitive target management network element shown in FIG. 12. For example, the "area" in FIG. 12 is replaced with the "target".

It may be understood that the target that is not allowed to be sensed may be configured on the sensitive area and sensitive target management network element, or the sensitive area and sensitive target management network element may receive a target that is not allowed to be sensed from another network element. For example, the another network element includes a UDM, an NRF, a UDSF, or another core network element, a network management network element, or the like.

In Embodiment 8, the first network element is an SF-U, an SF-C may send a third area to a third network element, and the third network element determines a fourth area based on an area that is not allowed to be sensed and the third area. The third network element may alternatively send the fourth area to the SF-C, so that the SF-C provides, based on the fourth area, a sensing result obtained through filtering on the sensitive area to a requester of a sensing service. For example, the third network element may delete the area that is not allowed to be sensed from the third area. In Embodiment 8, the area that is not allowed to be sensed may be configured on the third network element, or the third network element may receive the area that is not allowed to be sensed from another network element.

The area that is not allowed to be sensed may include an area that is not allowed to be sensed and/or 3GPP area information.

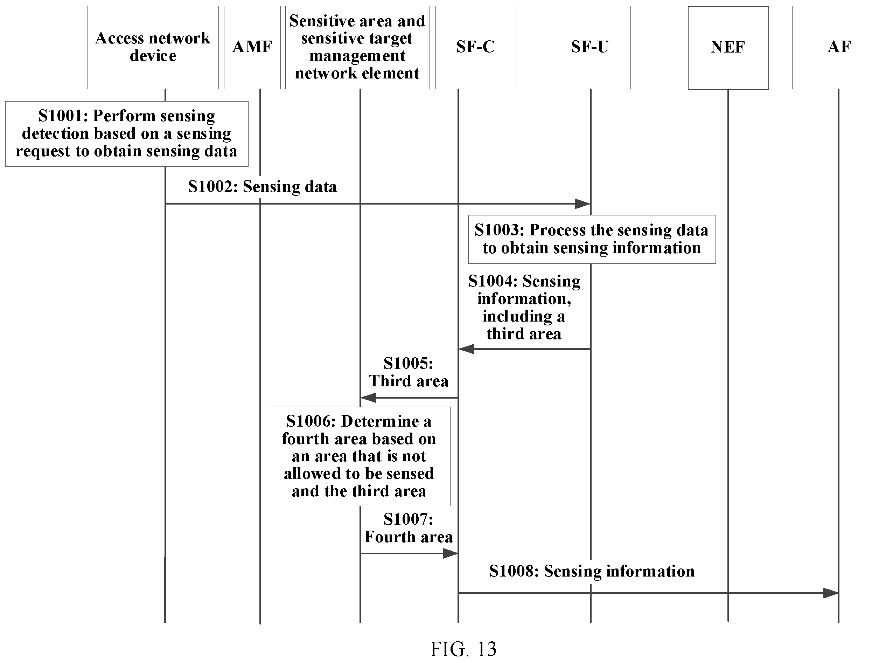

As shown in FIG. 13, an example in which the third network element is a sensitive area and sensitive target management network element is used. When the third network element determines the fourth area based on the area that is not allowed to be sensed and the third area, the method provided in this embodiment of this application may include the following steps.

For S1001 to S1004, refer to S801 to S804.

S1005: The SF-C sends the third area to the sensitive area and sensitive target management network element.

The third area is included in the sensing information shown in S1004. For example, in S1005, the SF-C may send all areas in the sensing information to the sensitive area and sensitive target management network element, where the all areas include the third area.

For example, the third area is included in a sensitive area filtering request.

The sensitive area filtering request may be used for requesting to filter an area that is not allowed to be sensed in the third area.

Optionally, when an area that is not allowed to be filtered is not configured in local information, the SF-C may send the request to the sensitive area and sensitive target management network element, to request the sensitive area and sensitive target management network element to filter the area that is not allowed to be sensed in the third area.

S1006: The sensitive area and sensitive target management network element determines the fourth area based on the area that is not allowed to be sensed and the third area.

Based on S1006, the sensitive area and sensitive target management network element may filter the area that is not allowed to be sensed in the third area. For example, the sensitive area and sensitive target management network element may delete the area that is not allowed to be sensed from the third area, or delete, from sensing information corresponding to the third area, sensing information corresponding to the area that is not allowed to be sensed.

With reference to the descriptions in S405, the area that is not allowed to be sensed may be obtained by the sensitive area and sensitive target management network element from local information, or may be received by the sensitive area and sensitive target management network element from another network element.

S1007: The sensitive area and sensitive target management network element sends the fourth area to the SF-C.

S1008: The SF-C sends the sensing information to the initiator of the sensing service.

The sensing information includes information about the fourth area, or the sensing information does not include the area that is not allowed to be sensed.

For an implementation of S1008, refer to S310. Details are not described again.

FIG. 13 is described by using an example in which an initiator of a sensing service is an AF.

It may be understood that, in the procedure shown in FIG. 13, in a C-U separation architecture of the SF, S1002 may be used as an example of S601. To be specific, the SF-U receives a fourth message from a base station, where the SF-U is used as an example of the first network element. Correspondingly, a fifth message may include the sensing information in S1008, that is, S1008 may be used as an example of S602-1. In addition, based on S1006, the sensitive area and sensitive target management network element may be used as the third network element to perform filtering on sensitive information in the sensitive area.

In addition, in Embodiment 8, the sensitive area and sensitive target management network element may further determine a fourth target based on a target that is not allowed to be sensed and a third target, for example, delete the target that is not allowed to be sensed from the third target. For an implementation, refer to the manner of determining the fourth area by the sensitive area and sensitive target management network element shown in FIG. 13. For example, the "area" in FIG. 12 is replaced with the "target".

It may be understood that the target that is not allowed to be sensed may be configured on the sensitive area and sensitive target management network element, or the sensitive area and sensitive target management network element may receive a target that is not allowed to be sensed from another network element. For example, the another network element includes a UDM, an NRF, a UDSF, or another core network element, a network management network element, or the like.

Based on a same concept, an embodiment of this application further provides a communication apparatus. The communication apparatus may include corresponding hardware structures and/or software modules for performing the functions shown in the foregoing methods. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

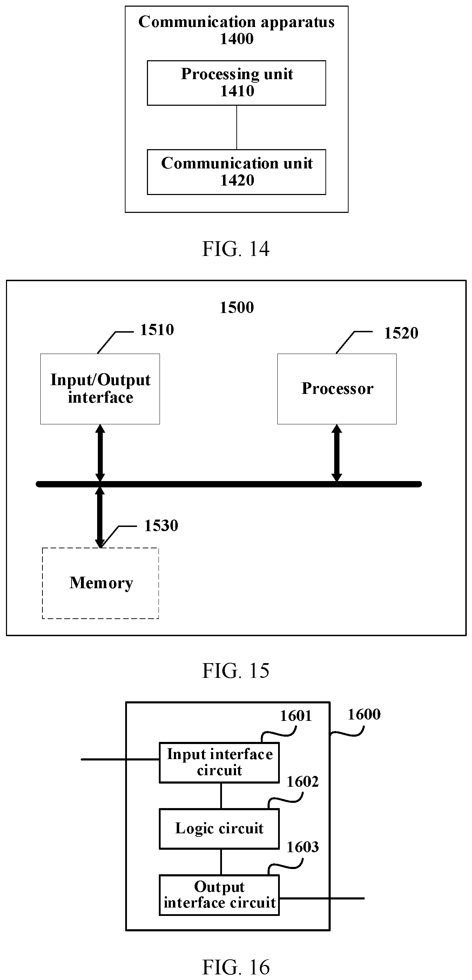

FIG. 14 to FIG. 16 each are a diagram of a structure of a possible communication apparatus according to an embodiment of this application. The communication apparatus may be configured to implement the functions of the first network element or the third network element in the foregoing method embodiments, and therefore may also implement beneficial effects of the foregoing method embodiments. In a possible implementation, the communication apparatus may be the first network element or the third network element in the foregoing method, or a component in the first network element or a component in the third network element. For related details and effects, refer to the descriptions in the foregoing embodiments.

As shown in FIG. 14, the communication apparatus 1400 includes a processing unit 1410 and a communication unit 1420. The communication unit 1420 may implement a corresponding communication function. The processing unit 1410 is configured to perform data processing, for example, parse/read data or information received by the communication unit 1420, for example, policy information, or trigger the communication unit 1420 to send data or information, or generate to-be-sent data or information. The communication unit 1420 may alternatively be a transceiver unit, an input/output interface, or the like, and is configured to perform a receiving and/or sending action by the communication apparatus 1400. The communication apparatus 1400 may be configured to implement functions of the first network element, the second network element, or the fourth network element in any one of the method embodiments shown in FIG. 3 and FIG. 5 to FIG. 8. For actions that can be performed by the communication apparatus, refer to the descriptions in the foregoing method embodiments. Details are not described herein again.

For example, when a function of the first network element shown in FIG. 3 is implemented, the communication unit 1420 may be configured to: receive a first message, and send a second message to an access network device. Optionally, the processing unit 1410 may be configured to determine a second area and/or a second target.

For another example, when a function of the third network element is implemented, the communication unit 1420 may be configured to: receive a first area and/or a first target, and send the second area and/or the second target to the access network device. The processing unit 1410 may be configured to determine the second area and/or the second target.

For example, when a function of the first network element shown in FIG. 9 is implemented, the communication unit 1420 may be configured to receive a fourth message and send a fifth message. Optionally, the processing unit 1410 may be configured to determine a second area and/or a second target.

For another example, when a function of the third network element is implemented, the communication unit 1420 may be configured to: receive a third area and/or a third target, and send a fourth area and/or a fourth target to the access network device. The processing unit 1410 may be configured to determine the second area and/or the second target.

It may be understood that in embodiments of this application, division into modules is an example, and is merely logical function division. In practical implementation, there may be another division manner. In addition, functional modules in embodiments of this application may be integrated into one processor, each module may exist alone physically, or two or more modules may be integrated into one module. The integrated module may be implemented in the form of hardware, or may be implemented in the form of a software functional module.

FIG. 15 shows a communication apparatus 1500 according to an embodiment of this application. The communication apparatus 1500 is configured to implement the communication method provided in this application. The communication apparatus 1500 may be a communication apparatus to which the communication method is applied, may be a component in the communication apparatus, or may be an apparatus that can be used in combination with the communication apparatus. The communication apparatus 1500 may be a first network element, a second network element, or a fourth network element. The communication apparatus 1500 may be a chip system or a chip. In this embodiment of this application, the chip system may include a chip, or may include a chip and another discrete component. The communication apparatus 1500 includes at least one processor 1520, configured to implement the communication method provided in embodiments of this application. The communication apparatus 1500 may further include an input/output interface 1510, and the input/output interface may include an input interface and/or an output interface. In this embodiment of this application, the input/output interface 1510 may be configured to communicate with another apparatus via a transmission medium, and a function of the input/output interface 1510 may include sending and/or receiving. For example, when being the chip, the communication apparatus 1500 performs transmission with another chip or device through the input/output interface 1510. The processor 1520 may be configured to implement the method described in the foregoing method embodiment.

For example, the processor 1520 may be configured to perform the actions performed by the foregoing processing unit 1410, and the input/output interface 1510 may be configured to perform the actions performed by the foregoing communication unit 1420. Details are not described again.

Optionally, the communication apparatus 1500 may further include at least one memory 1530, configured to store program instructions and/or data. The memory 1530 is coupled to the processor 1520. The coupling in this embodiment of this application may be an indirect coupling or a communication connection between apparatuses, units, or modules in an electrical form, a mechanical form, or another form, and is used for information exchange between the apparatuses, the units, or the modules. The processor 1520 may operate with the memory 1530 together. The processor 1520 may execute the program instructions stored in the memory 1530. At least one of the at least one memory may be integrated with the processor.

In this embodiment of this application, the memory 1530 may be a non-volatile memory, for example, a hard disk drive (hard disk drive, HDD) or a solid-state drive (solid-state drive, SSD), or may be a volatile memory (volatile memory), for example, a random-access memory (random-access memory, RAM). The memory is any other medium that can carry or store expected program code in a form of an instruction or a data structure and that can be accessed by a computer, but is not limited thereto. The memory in embodiments of this application may alternatively be a circuit or any other apparatus that can implement a storage function, and is configured to store the program instructions and/or the data.

In this embodiment of this application, the processor 1520 may be a general-purpose processor, a digital signal processor, an application-specific integrated circuit, a field programmable gate array or another programmable logic device, a discrete gate or a transistor logic device, or a discrete hardware component, and may implement or perform the method, steps, and logical block diagrams disclosed in embodiments of this application. The general-purpose processor may be a microprocessor or any conventional processor or the like. The steps of the method disclosed with reference to embodiments of this application may be directly performed by a hardware processor, or may be performed by using a combination of hardware in the processor and a software module.

FIG. 16 shows a communication apparatus 1600 according to an embodiment of this application. The communication apparatus 1600 is configured to implement the communication method provided in this application. The communication apparatus 1600 may be a communication apparatus to which the communication method shown in embodiments of this application is applied, or may be a component in the communication apparatus, or may be an apparatus that can be used in combination with the communication apparatus. The communication apparatus 1600 may be a first network element or a third network element. The communication apparatus 1600 may be a chip system or a chip. In this embodiment of this application, the chip system may include a chip, or may include a chip and another discrete component. The communication method provided in the foregoing embodiments may be partially or completely implemented by hardware or software. When the communication method is implemented by hardware, the communication apparatus 1600 may include an input interface circuit 1601, a logic circuit 1602, and an output interface circuit 1603.

Optionally, an example in which the apparatus is configured to implement a function of a receive end. The input interface circuit 1601 may be configured to perform the receiving action performed by the foregoing communication unit 1420, the output interface circuit 1603 may be configured to perform the sending action performed by the foregoing communication unit 1420, and the logic circuit 1602 may be configured to perform the action performed by the foregoing processing unit 1410. Details are not described again.

Optionally, in a specific implementation, the communication apparatus 1600 may be a chip or an integrated circuit.

Some or all of operations and functions performed by the communication apparatus described in the foregoing method embodiment of this application may be implemented by using the chip or the integrated circuit.

An embodiment of this application provides a computer-readable storage medium storing a computer program. The computer program includes instructions for performing the foregoing method embodiments.

An embodiment of this application provides a computer program product including instructions. The instructions, when executed on a computer, cause the computer to perform the foregoing method embodiments.

An embodiment of this application provides a communication system, including a first network element and a second network element. The communication system may be configured to perform any one or more procedures in FIG. 3 or FIG. 5 to FIG. 13.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor.

All or some of the foregoing embodiments may be implemented by using software, hardware, firmware, or any combination thereof. When software is used to implement embodiments, all or a part of the embodiments may be implemented in a form of a computer program product. The computer program product includes one or more computer instructions. When the computer instructions are loaded and executed on a computer, all or some of the procedures or functions according to embodiments of this application are produced. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, an SSD), or the like.

It should be noted that a part of this patent application document includes content protected by copyright. Except for making copies of patent documents of the Patent Office or recorded content of patent documents, the copyright owner reserves the copyright.

The first network element or the third network element in the foregoing apparatus embodiments exactly corresponds to the first network element or the third network element in the method embodiments. A corresponding module or unit performs a corresponding step. For example, a communication unit (a transceiver) performs a receiving step or a sending step in the method embodiments, and a step other than the sending step and the receiving step may be performed by a processing unit (a processor). For a function of a specific unit, refer to a corresponding method embodiment. There may be one or more processors.

Terminologies such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the internet interacting with other systems by using the signal).

A person of ordinary skill in the art may be aware that, in combination with illustrative logical blocks (illustrative logical block) described in embodiments disclosed in this specification and steps (step) may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes outside the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. When functions are implemented in the form of a software functional unit and sold or used as an independent product, the functions may be stored in a computer-readable storage medium.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

In the descriptions of this application, terms such as "first" and "second" are merely used for differentiated description, and cannot be understood as an indication or implication of relative importance, or cannot be understood as an indication or implication of an order. It should be noted that an appearance sequence of "first", "second", and the like is not limited in this application. For example, "second" may appear first, and then "first" appears. This is not limited in this application.

In the descriptions of this application, "at least one (type)" means one (type) or more (types), and "a plurality of (types)" means two (types) or more (types). "At least one of the following items" or a similar expression thereof means any combination of these items, including any combination of singular items or plural items. For example, at least one of a, b, or c may indicate a, b, c, a and b, a and c, b and c, or a, b, and c, where a, b, and c may be singular or plural. In the descriptions of this application, "/" represents "or". For example, a/b represents a or b.

## Claims

1. A communication method, comprising:
receiving, by a first network element, a first message from a second network element, wherein the first message is used for requesting sensing information, the first message comprises a first area and/or a first target, the first area comprises an area that is not allowed to be sensed, and the first target comprises a target that is not allowed to be sensed; and
sending, by the first network element, a second message to an access network device, wherein the second message is used for requesting the access network device to perform sensing, the second message comprises a second area and/or a second target, the second area is an area that is allowed to be sensed, and the second target is a target that is allowed to be sensed.

2. The method according to claim 1, wherein the method further comprises:
sending a third message when the first area does not comprise an area that is allowed to be sensed; and/or
sending a third message when the first target does not comprise a target that is allowed to be sensed, wherein
the third message is used for rejecting sensing.

3. The method according to claim 1 or 2, wherein the method further comprises:
determining, by the first network element, the second area based on the area that is not allowed to be sensed and the first area; and/or
determining, by the first network element, the second target based on the target that is not allowed to be sensed and the first target.

4. The method according to claim 3, wherein the method further comprises one or more of the following:
receiving, by the first network element, the area that is not allowed to be sensed;
obtaining locally, by the first network element, the area that is not allowed to be sensed;
receiving, by the first network element, the target that is not allowed to be sensed; and
obtaining locally, by the first network element, the target that is not allowed to be sensed.

5. The method according to claim 3 or 4, wherein
the method further comprises:
determining, by the first network element based on the area that is not allowed to be sensed and information about the first area, that the first area comprises the area that is not allowed to be sensed.

6. The method according to claim 1 or 2, wherein the method further comprises:
sending, by the first network element, the first area and/or the first target to a third network element; and
receiving, by the first network element, the second area and/or the second target from the third network element.

7. The method according to claim 6, wherein the first area comprises geographic area information of the first area.

8. A communication method, comprising:
receiving, by a third network element, a first area and/or a first target from a first network element, wherein the first area comprises an area that is not allowed to be sensed, and the first target comprises a target that is not allowed to be sensed; and
sending, by the third network element, a second area and/or a second target, wherein the second area is an area that is allowed to be sensed, and the second target is a target that is allowed to be sensed.

9. The method according to claim 8, wherein the method further comprises:
determining, by the third network element, the second area based on the area that is not allowed to be sensed and the first area; and/or
determining, by the third network element, the second target based on the target that is not allowed to be sensed and the first target.

10. The method according to claim 9, wherein the method further comprises one or more of the following:
receiving, by the third network element, the area that is not allowed to be sensed;
obtaining locally, by the third network element, the area that is not allowed to be sensed;
receiving, by the third network element, the target that is not allowed to be sensed; and
obtaining locally, by the third network element, the target that is not allowed to be sensed.

11. The method according to any one of claims 8 to 10, wherein the first area comprises geographic area information of the first area.

12. The method according to any one of claims 8 to 11, wherein sending, by the third network element, the second area and/or the second target comprises:
sending, by the third network element, the second area and/or the second target to the first network element.

13. The method according to claim 8, wherein the first area and/or the first target are/is determined based on sensing data; and
sending, by the third network element, the second area and/or the second target comprises:
sending, by the third network element, the second area and/or the second target to a second network element.

14. The method according to claim 13, wherein the method further comprises:
receiving, by the first network element, a fourth message from an access network device, wherein the fourth message comprises the sensing data.

15. A communication method, comprising:
receiving, by a first network element, a fourth message from an access network device, wherein the fourth message comprises sensing data; and
sending, by the first network element, a fifth message to a second network element, wherein the fifth message comprises a fourth area and/or a fourth target, the fourth area and/or the fourth target are/is determined based on the sensing data, the fourth area is an area that is allowed to be sensed, and the fourth target is a target that is allowed to be sensed.

16. The method according to claim 15, wherein the method further comprises:
determining, by the first network element, a third area and/or a third target based on the sensing data, wherein the third area comprises an area that is not allowed to be sensed, the third target comprises a target that is not allowed to be sensed, the fourth area is determined based on the third area, and the fourth target is determined based on the third target.

17. The method according to claim 16, wherein the method further comprises:
determining, by the first network element, the fourth area based on the area that is not allowed to be sensed and the third area; and/or
determining, by the first network element, the fourth target based on the target that is not allowed to be sensed and the third target.

18. The method according to claim 17, wherein the method further comprises one or more of the following:
receiving, by the first network element, the area that is not allowed to be sensed;
obtaining locally, by the first network element, the area that is not allowed to be sensed;
receiving, by the first network element, the target that is not allowed to be sensed; and
obtaining locally, by the first network element, the target that is not allowed to be sensed.

19. The method according to claim 16, wherein the method further comprises:
sending, by the first network element, the third area and/or the third target to a third network element; and
receiving, by the first network element, the fourth area and/or the fourth target from the third network element.

20. A communication apparatus, comprising a processor, wherein the processor is configured to execute a computer program or instructions, to implement the method according to any one of claims 1 to 19.

21. The apparatus according to claim 20, further comprising a memory and/or a transceiver, wherein the memory is configured to store the computer program or the instructions, and the transceiver is used by the apparatus for communication.

22. A computer-readable storage medium, wherein the storage medium stores a computer program or instructions, and when the computer program or the instructions are executed by a communication apparatus, the method according to any one of claims 1 to 19 is implemented.
